# FASCICULE DE BREVET EUROPEEN

(11) **EP 1 643 136 B1**
(45) Date de publication et mention de la délivrance du brevet: **09.04.2008**
(21) Numéro de dépôt: 05108985.2
(22) Date de dépôt: 29.09.2005
(51) Int. Cl.: F04D 29/68, F04D 27/02

(54) **Procédé de circulation d'air dans un compresseur de turbomachine**
Verfahren zur Luftzirkulation für Turbokompressoren
Method for circulating air in a turbocompressor

(30) Priorité: 30.09.2004 FR 0452202
(43) Date de publication de la demande: 05.04.2006
(73) Titulaire: SNECMA, 75015 Paris (FR)
(72) Inventeur: Lardellier, Alain, Marie, Joseph, 77000, Melun (FR)
(74) Mandataire: Poulin, Gérard

(56) Documents cités:
- WO-A-98/30802
- GB-A- 1 085 227
- US-A- 3 846 038
- US-B1- 6 428 271

## Description

### DOMAINE TECHNIQUE

La présente invention se rapporte au domaine des compresseurs de turbomachines, et notamment aux compresseurs de moteurs d'aéronefs.

Elle vise un procédé de circulation d'air dans un compresseur de turbomachine.

Elle vise aussi un agencement de compresseur, pour la mise en oeuvre du procédé de circulation d'air.

Elle vise également un étage de compression comportant un tel agencement de compresseur.

Elle vise encore un compresseur comportant un tel agencement de compresseur.

Elle vise enfin un moteur d'aéronef équipé d'un tel compresseur.

### ÉTAT DE LA TECHNIQUE ANTÉRIEURE

De manière connue en soi, un compresseur de turbomachine comporte
- plusieurs étages de compression composés chacun d'une roue aubagée mobile et d'une roue aubagée fixe,
- une veine dans laquelle se trouvent les aubes de la roue mobile et les aubes de la roue fixe.

La veine peut être délimitée entre un carter extérieur et un carter intérieur, ou bien entre un carter extérieur et un moyeu central.

Il existe, dans la veine, un jeu fonctionnel entre les aubes de chaque roue mobile et la paroi du carter extérieur. De manière analogue, il existe un jeu fonctionnel entre les aubes de chaque roue fixe et la paroi du carter intérieur ou le moyeu. Ces jeux fonctionnels sont parcourus par des écoulements secondaires, s'écoulant dans le sens inverse (de l'aval vers l'amont) du sens de l'écoulement principal (de l'amont vers l'aval), qui sont des écoulements parasites. L'homme du métier souhaite généralement éliminer ou réduire les écoulements d'air parasite qui se développent à l'intérieur du compresseur, et qui sont nuisibles à l'efficacité aérodynamique de l'étage de compression. En pratique, la structure du compresseur est conçue de manière à minimiser ces jeux, et donc les écoulements parasites.

Dans le même esprit d'améliorer le fonctionnement d'un compresseur, il est bien connu que le fait d'aspirer la couche limite de l'écoulement principal en un ou plusieurs emplacement(s) approprié(s) du profil des aubes mobiles et fixes procure une amélioration de la situation aérodynamique d'un étage de compression, qui permet d'augmenter le rapport de compression de l'étage, sans détériorer son rendement, ni sa limite de décrochage. Cela permet de disposer d'un compresseur dont le nombre d'étages est sensiblement plus faible, pour un taux de compression donné, que celui d'un compresseur dont les profils ne sont pas aspirés.

Le document GB 1 085 227-A divulgue des aubes fixes ou des aubes mobiles, dans lesquelles sont ménagées des cavités reliées à la surface de l'aube par des orifices. Ces orifices sont situés près du bord de fuite des aubes et permettent d'aspirer la couche limite des aubes dans leur cavité. Un passage traversant la base de chaque aube fait communiquer la cavité de cette aube avec un circuit intérieur du compresseur, sur lequel est prévu une pompe d'aspiration. En contrôlant de cette manière les écoulements de couche limite, les turbulences à l'intérieur de la turbomachine sont réduites, ce qui permet de réduire le bruit de la turbomachine.

Le document FR 2 166 494-A5 divulgue des ouvertures d'aspiration ménagées dans la paroi du carter extérieur du compresseur, pour éliminer la couche limite qui se développe entre les aubes de deux étages successifs de compression. Ces ouvertures d'aspiration sont reliées à des moyens d'aspiration comme par exemple un étranglement et/ou une vanne de réglage. L'air aspiré est ensuite rejeté dans l'atmosphère ou réutilisé.

Le document FR 2 248 732-A5 divulgue un perfectionnement du FR 2 166 494-A5, dont le but est d'éliminer ou réduire la couche limite d'écoulement le long du carter extérieur du compresseur et la couche limite d'écoulement le long des aubes. Dans chaque aube est ménagé un piège à couche limite constitué d'un canal relié à des moyens d'aspiration de couche limite. Le canal s'ouvre sur l'extrados de l'aube, dans une zone de changement de courbure. Les moyens d'aspiration, analogues à ceux du FR 2 166 494, se trouvent dans le carter ou dans le moyeu du compresseur. Des ouvertures de la paroi du carter du compresseur sont également prévues, comme dans le FR 2 166 494-A5.

Le document WO 98/30802-A1 divulgue des aubes, fixes ou mobiles, dans lesquelles sont ménagées des cavités. Des buses, fentes, surfaces poreuses ou analogues sont prévues à travers les aubes pour aspirer la couche limite de chaque aube vers sa cavité intérieure. L'air aspiré est ensuite transporté dans la cavité vers une extrémité de l'aube pour être évacué. Lorsque l'air est évacué vers l'extrémité d'une aube mobile, il est évacué hors du compresseur par une ouverture du carter extérieur du compresseur qui est disposée en regard de cette aube mobile et qui débouche dans un collecteur, ce qui évite que l'air évacué soit réintroduit dans le compresseur.

Le document US 6 004 095-A divulgue plusieurs agencements de compresseur de turbomachine, permettant de souffler et/ou d'aspirer de l'air, et de faire circuler l'air soufflé ou aspiré, afin de réduire le bruit engendré par la turbomachine.

Dans un agencement divulgué par le US 6 004 095-A, les aubes mobiles sont munies de cavités. Les cavités sont reliées à la surface de l'aube par des orifices à travers lesquels l'air est aspiré. Elles sont reliées à une enceinte interne du compresseur par un passage traversant leur base, à travers lequel l'air est aspiré vers une autre partie de la turbomachine. L'aspiration est effectuée au moyen d'une pompe.

Dans un autre agencement divulgué par le US 6 004 095-A, les aubes mobiles sont munies de cavités. Les cavités sont reliées à la surface de l'aube par des orifices à travers lesquels l'air est aspiré. Elles sont ouvertes vers leur extrémité sur un collecteur ayant une paroi poreuse à travers lequel l'air est aspiré vers une enceinte située au-delà de la paroi du carter extérieur, à travers une ouverture ménagée dans ladite paroi. Des fentes peuvent également être prévues dans la paroi du carter extérieur, en amont des aubes mobiles, pour aspirer la couche limite de la paroi du carter extérieur vers ladite enceinte. L'aspiration est effectuée au moyen d'une pompe.

Dans un autre agencement divulgué par le US 6 004 095-A, le compresseur comporte des aubes directrices en amont de la soufflante. De l'air provenant du compresseur basse pression, en aval de la soufflante, est renvoyé à travers une enceinte intérieure vers les aubes directrices, à travers leur base intérieure et leur base extérieure. En variante, ces aubes directrices peuvent également être munies d'une ou plusieurs cavité(s) reliées à leur surface par des orifices et munies de passages traversant leur(s) base(s). Ainsi, de l'air aspiré à travers les orifices est transporté à l'intérieur de la (des) cavité(s) vers le moyeu et/ou vers le carter du rotor, au moyen d'une pompe.

Le document US 6 428 271 divulgue un carter mécanique, une roue ayant une pluralité de pales montées tournantes dans le carter, un tube couplé à la pluralité de pales, un élément de paroi statique couplé au carter mécanique et ayant une partie alignée avec le côté arrière du tube et au moins une ouverture de fuite formée dans l'élément de paroi.

Les documents mentionnés ci-dessus décrivent donc des agencements comportant des moyens pour réduire ou éliminer les écoulements de couche limite qui se développent autour des aubes, fixes ou mobiles, et/ou le long du carter extérieur du compresseur.

Ces agencements mettent en oeuvre des pompes ou analogues en tant que moyens d'aspiration d'air.

### EXPOSÉ DE L'INVENTION

La présente invention s'applique à un compresseur du type comportant :
- plusieurs étages de compression composés chacun d'une roue aubagée mobile et d'une roue aubagée fixe,
- un carter extérieur et un carter intérieur, délimitant une veine dans laquelle se trouvent les aubes de la roue mobile et les aubes de la roue fixe,
- une partie extérieure de la veine, dite « veine extérieure », correspondant à des jeux fonctionnels entre le carter extérieur et les aubes de la roue mobile, et
- une partie intérieure de la veine, dite « veine intérieure », correspondant à des jeux fonctionnels entre le carter intérieur et les aubes de la roue fixe.

La présente invention a pour but général de proposer un procédé et un agencement de compresseur de turbomachine, qui soient performants et peu coûteux, destinés à faire circuler de l'air dans le compresseur et hors de celui-ci, sans avoir recours à des moyens d'aspiration spécifiques, coûteux en performance, tels que des pompes d'aspiration, afin d'éliminer ou tout au moins réduire les écoulements parasites de couches limites qui se développent aux parois des veines extérieure et intérieure, et afin d'éliminer ou tout au moins de réduire la couche limite des profils des aubes fixes et mobiles.

Il est ainsi possible :
- de prélever les écoulements secondaires de la veine intérieure d'un compresseur de turbomachine, qui s'écoulent de l'aval vers l'amont, dans des jeux fonctionnels existant le long du carter intérieur du compresseur ; et de conduire le débit d'air ainsi prélevé vers une alimentation de systèmes utiles au fonctionnement de la turbomachine, comme par exemple le refroidissement de parties chaudes, la ventilation de cavités, des prélèvements avionneurs, cela sans avoir recours à des moyens d'aspiration forcée, tels que des pompes d'aspiration, et/ou
- de prélever les écoulements secondaires de la veine extérieure d'un compresseur de turbomachine, qui s'écoulent de l'aval vers l'amont, dans des jeux fonctionnels existant le long du carter extérieur du compresseur ; et de conduire le débit d'air ainsi prélevé vers une alimentation de systèmes utiles au fonctionnement de la turbomachine, comme par exemple le refroidissement de parties chaudes, la ventilation de cavités, des prélèvements avionneurs, cela sans avoir recours à des moyens d'aspiration forcée, tels que des pompes d'aspiration, et/ou
- de prélever la couche limite des profils des aubes fixes et/ou des aubes mobiles des roues aubagées du compresseur ; et de conduire le débit d'air ainsi prélevé vers une alimentation de systèmes utiles au fonctionnement de la turbomachine, comme par exemple le refroidissement de parties chaudes, la ventilation de cavités, des prélèvements avionneurs, cela sans avoir recours à des moyens d'aspiration forcée, tels que des pompes d'aspiration.

Selon un premier aspect, l'invention concerne un procédé de circulation d'air dans un compresseur de turbomachine, ledit compresseur comportant :
- plusieurs étages de compression composés chacun d'une roue aubagée mobile et d'une roue aubagée fixe,
- un carter extérieur et un carter intérieur, délimitant une veine dans laquelle se trouvent les aubes mobiles de la roue mobile et les aubes fixes de la roue fixe,
- une partie extérieure de la veine, dite « veine extérieure », correspondant à des jeux fonctionnels entre le carter extérieur et les aubes de la roue mobile, et
- une partie intérieure de la veine, dite « veine intérieure », correspondant à des jeux fonctionnels entre le carter intérieur et les aubes de la roue fixe.

Selon un premier mode de réalisation, le procédé comporte, pour au moins un étage de compression comprenant une roue fixe :
- une opération d'aspiration, au cours de laquelle on aspire de l'air présent dans la veine intérieure, et on l'envoie dans au moins une aube fixe de ladite roue fixe, et
- au moins une opération de prélèvement au cours de laquelle on prélève de l'air dans ladite au moins une aube fixe de ladite roue fixe, et on l'envoie à l'extérieur du compresseur.

Selon des deuxième, troisième, et quatrième modes de réalisation, le procédé comporte, en outre, une opération d'aspiration au cours de laquelle :
- on aspire de l'air dans au moins une aube mobile d'au moins une roue mobile adjacente à ladite roue fixe, et on l'envoie dans au moins une aube fixe de ladite au moins une roue fixe.

Selon le deuxième mode de réalisation, le procédé comporte, en outre, une opération d'aspiration, au cours de laquelle :
- on aspire de l'air dans la veine extérieure et on l'envoie dans ladite au moins une aube mobile d'au moins une roue mobile.

Selon le troisième mode de réalisation, le procédé comporte, en outre, une opération d'aspiration, au cours de laquelle :
- on aspire de l'air à l'extrados du profil de ladite au moins une aube mobile de ladite au moins une roue mobile, et on l'envoie dans ladite au moins une aube mobile de ladite au moins une roue mobile, et
- on aspire de l'air à l'extrados du profil de ladite au moins une aube fixe de ladite roue fixe, et on l'envoie dans ladite au moins une aube fixe de ladite roue fixe.

Selon le quatrième mode de réalisation, le procédé comporte une opération au cours de laquelle :
- on aspire de l'air dans la veine extérieure et on l'envoie dans ladite au moins une aube mobile d'au moins une roue mobile,
- on aspire de l'air à l'extrados du profil de ladite au moins une aube mobile de ladite au moins une roue mobile, et on l'envoie dans ladite au moins une aube mobile de ladite au moins une roue mobile, et
- on aspire de l'air à l'extrados du profil de ladite au moins une aube fixe de ladite roue fixe, et on l'envoie dans ladite au moins une aube fixe de ladite roue fixe.

Selon les deuxième, troisième et quatrième modes de réalisation, on aspire de l'air dans au moins une aube mobile de la roue mobile située en amont de ladite roue fixe et adjacente à celle-ci, et on l'envoie dans au moins une aube fixe de ladite au moins une roue fixe. L'air en circulation entre la roue mobile et la roue fixe passe par une enceinte intérieure définie par le carter intérieur.

Selon un cinquième mode de réalisation, qui est une alternative au quatrième mode de réalisation, on aspire de l'air dans au moins une aube mobile de la roue mobile située en aval de ladite roue fixe et adjacente à celle-ci, et on l'envoie dans au moins une aube fixe de ladite au moins une roue fixe.

Selon un sixième mode de réalisation qui est une autre alternative au quatrième mode de réalisation, on aspire de l'air dans au moins une aube mobile de la roue mobile située en amont de ladite roue fixe et adjacente à celle-ci, ainsi que dans au moins une aube mobile de la roue mobile située en aval de ladite roue fixe et adjacente à celle-ci, et on l'envoie dans au moins une aube fixe de ladite roue fixe.

Selon un septième mode de réalisation, qui est encore une autre alternative au quatrième mode de réalisation, l'air en circulation entre la roue mobile et la roue fixe passe par une enceinte intermédiaire définie entre le carter intérieur et une virole intermédiaire.

Selon un huitième mode de réalisation, le procédé comporte, en outre, pour au moins un autre étage de compression comprenant une roue fixe :
- une opération additionnelle d'aspiration, au cours de laquelle on aspire de l'air présent dans la veine intérieure, et on l'envoie dans une enceinte intermédiaire, et
- une opération additionnelle de prélèvement, au cours de laquelle on prélève de l'air dans ladite enceinte intermédiaire, et on l'envoie à l'intérieur du compresseur.

Selon le huitième mode de réalisation, le procédé comporte, en outre, une opération additionnelle et facultative d'aspiration au cours de laquelle :
- on aspire de l'air dans au moins une aube mobile d'au moins une roue mobile adjacente à ladite roue fixe, et on l'envoie dans ladite enceinte intermédiaire.

Selon le huitième mode de réalisation, le procédé comporte, en outre, une opération additionnelle et facultative d'aspiration au cours de laquelle :
- on aspire de l'air dans la veine extérieure et on l'envoie dans ladite au moins une aube mobile de ladite au moins une roue mobile.

Selon le huitième mode de réalisation, le procédé comporte, en outre, une opération additionnelle et facultative d'aspiration au cours de laquelle :
- on aspire de l'air à l'extrados du profil de ladite au moins une aube mobile de ladite au moins une roue mobile, et on l'envoie dans ladite au moins une aube mobile de ladite au moins une roue mobile, et
- on aspire de l'air à l'extrados du profil de ladite au moins une aube fixe de ladite au moins une roue fixe, et on l'envoie dans ladite au moins une aube fixe de ladite roue fixe.

Selon une alternative du huitième mode de réalisation, on aspire de l'air dans au moins une aube mobile de la roue mobile située en amont de ladite roue fixe et adjacente à celle-ci, et on l'envoie dans ladite enceinte intermédiaire.

Selon une autre alternative du huitième mode de réalisation, on aspire de l'air dans au moins une aube mobile de la roue mobile située en aval de ladite roue fixe et adjacente à celle-ci, et on l'envoie dans ladite enceinte intermédiaire.

Selon encore une autre alternative du huitième mode de réalisation, on aspire de l'air dans au moins une aube mobile de chacune des deux roues mobiles situées de part et d'autre de ladite roue fixe, et on l'envoie dans ladite enceinte intermédiaire.

Selon un deuxième aspect, l'invention concerne un agencement de compresseur, pour la mise en oeuvre du procédé de circulation d'air selon le premier aspect, ledit compresseur comportant :
- plusieurs étages de compression composés chacun d'une roue aubagée mobile et d'une roue aubagée fixe,
- un carter extérieur et un carter intérieur, délimitant une veine dans laquelle se trouvent les aubes mobiles de la roue mobile et les aubes fixes de la roue fixe,
- une partie extérieure de la veine, dite « veine extérieure » correspondant à des jeux fonctionnels entre le carter extérieur et les aubes mobiles de la roue mobile, et
- une partie intérieure de la veine, dite « veine intérieure », correspondant à des jeux fonctionnels entre le carter intérieur et les aubes fixe de la roue fixe.

Selon un premier mode de réalisation, l'agencement de compresseur comporte, pour au moins un étage de compression comportant une roue fixe :
- des premiers moyens d'aspiration, pour aspirer de l'air présent dans la veine intérieure, et pour envoyer cet air dans au moins une aube fixe de ladite une roue fixe, et
- des moyens de prélèvement, pour prélever de l'air dans ladite au moins une aube fixe de ladite roue fixe et pour envoyer cet air à l'extérieur du compresseur.

Selon des deuxième, troisième, et quatrième modes de réalisation, l'agencement de compresseur comporte, en outre :
- des deuxièmes moyens d'aspiration, pour aspirer de l'air dans au moins une aube mobile d'au moins une roue mobile adjacente à ladite roue fixe, et l'envoyer dans au moins une aube fixe de ladite roue fixe.

Selon le deuxième mode de réalisation, l'agencement de compresseur comporte, en outre :
- des troisièmes moyens d'aspiration, pour aspirer de l'air dans la veine extérieure, et l'envoyer dans au moins une aube mobile de ladite au moins une roue mobile.

Selon le troisième mode de réalisation, l'agencement de compresseur comporte, en outre :
- des quatrièmes moyens d'aspiration, pour aspirer de l'air à l'extrados du profil d'au moins une aube fixe de ladite roue fixe, et l'envoyer dans ladite au moins une aube fixe de ladite roue fixe, et
- des cinquièmes moyens d'aspiration, pour aspirer de l'air à l'extrados du profil d'au moins une aube mobile de ladite au moins une roue mobile, et l'envoyer directement dans ladite au moins une aube mobile de ladite au moins une roue mobile.

Selon le quatrième mode de réalisation, l'agencement de compresseur comporte :
- des troisièmes moyens d'aspiration, pour aspirer de l'air dans la veine extérieure, et l'envoyer dans au moins une aube mobile de ladite au moins une roue mobile.
- des quatrièmes moyens d'aspiration, pour aspirer de l'air à l'extrados du profil d'au moins une aube fixe de ladite roue fixe, et l'envoyer dans ladite au moins une aube fixe de ladite roue fixe, et
- des cinquièmes moyens d'aspiration, pour aspirer de l'air à l'extrados du profil d'au moins une aube mobile de ladite au moins une roue mobile, et l'envoyer directement dans ladite au moins une aube mobile de ladite au moins une roue mobile.

Selon les deuxième, troisième et quatrième modes de réalisation, l'agencement de compresseur comporte des deuxièmes moyens d'aspiration, pour aspirer de l'air dans au moins une aube mobile de la roue mobile située en amont de ladite roue fixe et adjacente à celle-ci, et l'envoyer dans au moins une aube fixe de ladite roue fixe. L'air en circulation entre la roue mobile et la roue fixe passe par une enceinte intérieure définie par le carter intérieur.

Selon un cinquième mode de réalisation, qui est une alternative au quatrième mode de réalisation, l'agencement de compresseur comporte des deuxièmes moyens d'aspiration, pour aspirer de l'air dans au moins une aube mobile de la roue mobile située en aval de ladite roue fixe et adjacente à celle-ci, et l'envoyer dans au moins une aube fixe de ladite roue fixe.

Selon un sixième mode de réalisation, qui est une autre alternative au quatrième mode de réalisation, l'agencement de compresseur comporte des deuxièmes moyens d'aspiration, pour aspirer de l'air dans au moins une aube mobile de chacune des deux roues mobiles situées de part et d'autre de ladite roue fixe, et l'envoyer dans au moins une aube fixe de ladite roue fixe.

Selon un septième mode de réalisation, qui est encore une autre alternative au quatrième mode de réalisation, l'air en circulation entre la roue mobile et la roue fixe passe par une enceinte intermédiaire définie entre le carter intérieur et une virole intermédiaire.

Les premiers moyens d'aspiration comportent une cavité intérieure de ladite aube fixe débouchant par un orifice dans la veine intérieure.

Les deuxièmes moyens d'aspiration comportent une cavité intérieure de ladite aube mobile, qui débouche par un orifice du côté amont ou du côté aval de ladite roue mobile dans une enceinte intérieure délimitée par le carter intérieur, et au moins une ouverture traversante du carter intérieur qui fait communiquer ladite enceinte intérieure avec la veine intérieure en au moins un emplacement se trouvant en regard d'une aube fixe de ladite roue fixe.

Les troisièmes moyens d'aspiration comportent une cavité de ladite aube mobile, qui débouche par un orifice dans la veine extérieure.

Les quatrièmes moyens d'aspiration comportent une cavité intérieure de ladite aube fixe et au moins un orifice traversant latéral qui met en communication l'extrados du profil de ladite aube fixe avec sa cavité intérieure, et les cinquièmes moyens d'aspiration comportent une cavité intérieure de ladite aube mobile et au moins un orifice traversant latéral qui met en communication l'extrados du profil de ladite aube mobile avec sa cavité intérieure.

Les moyens de prélèvement comportent une ouverture traversante faisant communiquer une cavité intérieure de ladite aube fixe avec l'extérieur de la veine.

Selon un huitième mode de réalisation, l'agencement de compresseur comporte des moyens additionnels d'aspiration, qui mettent en communication une enceinte intermédiaire avec l'enceinte intérieure. Les moyens additionnels d'aspiration comprennent au moins un conduit d'aspiration qui traverse le carter intérieur.

Selon un troisième aspect, l'invention se rapporte à un étage de compression d'une turbomachine comportant un agencement de compresseur selon le deuxième aspect de l'invention.

Selon un quatrième aspect, l'invention se rapporte à un compresseur de turbomachine comportant un agencement de compresseur selon le deuxième aspect de l'invention.

Selon un cinquième aspect, l'invention se rapporte à un moteur d'aéronef équipé d'un compresseur comportant un agencement de compresseur selon le deuxième aspect de l'invention.

Selon l'invention, l'homme du métier peut avantageusement sélectionner, parmi les agencements proposés, un agencement qui permet de satisfaire les besoins d'intégration dans une turbomachine d'un compresseur mettant en oeuvre une (des) aspiration(s).

Les agencements proposés permettent de réaliser à l'aide de circuits courts, à faible perte de charge, sensiblement la totalité des aspirations visant à améliorer la compression, et à éliminer ou diminuer fortement les fuites parasites d'un compresseur qui sont généralement négligées dans les agencements de l'art antérieur.

Selon l'invention, il n'est pas nécessaire de recourir à des systèmes d'aspiration forcée, tels que des pompes d'aspiration ou de type trompe à jet, ou autres systèmes d'extraction coûteux en énergie.

### BRÈVE DESCRIPTION DES DESSINS

L'invention sera mieux comprise à la lecture de la description détaillée qui va suivre de modes de réalisation de l'invention, donnés à titre illustratif et nullement limitatif, en référence aux dessins annexés, dans lesquels :
- la figure 1, illustre, de façon schématique, partielle, et en coupe, un agencement classique d'un compresseur de turbomachine ;
- la figure 2 illustre, de façon schématique, partielle, et en coupe, un premier mode de réalisation du procédé de circulation d'air et de l'agencement de compresseur selon l'invention ;
- la figure 3 illustre, de façon schématique, partielle, et en coupe, un deuxième mode de réalisation du procédé de circulation d'air et de l'agencement de compresseur selon l'invention ;
- la figure 4 illustre, de façon schématique, partielle, et en coupe, un troisième mode de réalisation du procédé de circulation d'air et de l'agencement de compresseur selon l'invention ;
- la figure 5 illustre, de façon schématique, partielle, et en coupe, un quatrième mode de réalisation du procédé de circulation d'air et de l'agencement de compresseur selon l'invention ;
- la figure 6 illustre, de façon schématique, partielle, et en coupe, un cinquième mode de réalisation du procédé de circulation d'air et de l'agencement de compresseur selon l'invention ;
- la figure 7 illustre, de façon schématique, partielle, et en coupe, un sixième mode de réalisation du procédé de circulation d'air et de l'agencement de compresseur selon l'invention ;
- la figure 8 illustre, de façon schématique, partielle, et en coupe, un septième mode de réalisation du procédé de circulation d'air et de l'agencement de compresseur selon l'invention ;
- la figure 9 illustre, de façon schématique, partielle, et en coupe, un huitième mode de réalisation du procédé de circulation d'air et de l'agencement de compresseur selon l'invention.

### EXPOSÉ DÉTAILLÉ DE MODES DE RÉALISATION PARTICULIERS

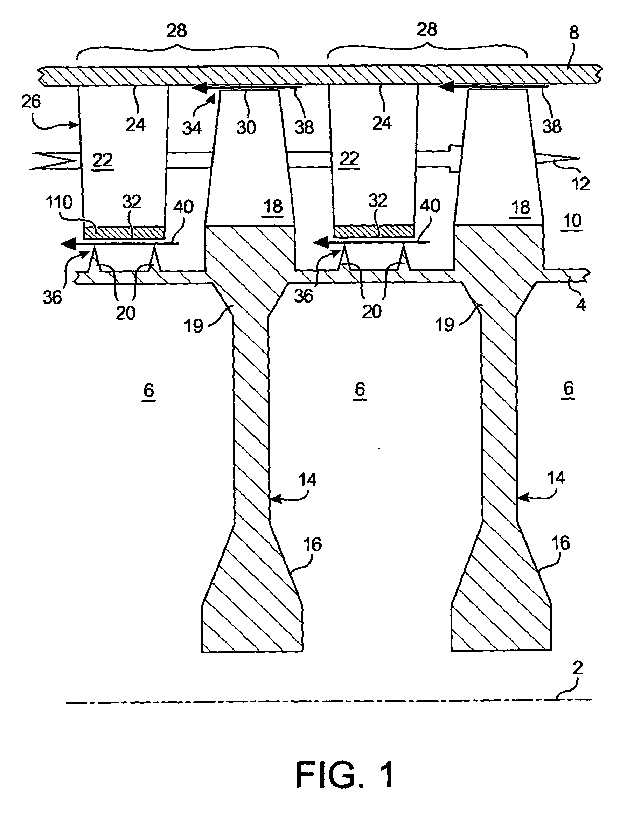

Un compresseur classique est illustré schématiquement et partiellement à la figure 1, selon une coupe longitudinale passant entre les aubes fixes et les aubes mobiles. Il comporte un moyeu central (non représenté) d'axe 2, un carter intérieur 4 sensiblement annulaire autour du moyeu, et délimitant une enceinte intérieure 6 du compresseur, et un carter extérieur 8 sensiblement annulaire autour du carter intérieur 4. Le carter intérieur 4 et le carter extérieur 8 délimitent entre eux une veine 10 dans laquelle s'écoule un écoulement d'air principal désigné à la figure 1 par la flèche 12. La flèche 12 définit un sens d'écoulement de l'amont (à gauche sur la figure) vers l'aval (à droite sur la figure).

Le compresseur comporte des roues mobiles 14, comprenant chacune un disque 16 d'axe 2 se prolongeant par des aubes mobiles 18 réparties sur sa périphérie. Les roues mobiles 14 sont disposées dans le compresseur, de telle sorte que les aubes mobiles 18 se trouvent dans la veine 10. Les roues mobiles 14 sont par ailleurs reliées entre elles par l'intermédiaire du carter intérieur 4, sensiblement au niveau de leur base 19 par laquelle elles sont ancrées sur le disque 16 correspondant. Du côté de la veine 10, le carter intérieur 4 présente, sur des portions se trouvant entre les aubes mobiles 18 et en regard des aubes fixes 22, des reliefs 20 formant des labyrinthes destinés à minimiser les fuites parasites inhérentes aux jeux de fonctionnement entre parties fixes et mobiles.

Entre les aubes mobiles 18 se trouvent des aubes fixes 22, qui sont ancrées sur le carter extérieur 8 par leur base 24. Les aubes fixes 22 sont réparties sur une section du carter extérieur 8, de manière à former des roues fixes 26.

A leur sommet 32, c'est-à-dire à leur extrémité opposée à leur base 24, les aubes fixes 22 sont solidaires d'un anneau 110 qui délimite la veine intérieure des roues fixes 26.

Les roues mobiles 14 et les roues fixes 26 sont disposées de façon alternée. Il s'ensuit que chaque roue mobile 14 se trouve entre deux roues fixes 26, et que chaque roue fixe 26 se trouve entre deux roues mobiles 14. Des étages de compression 28 sont définis dans le compresseur, comme étant constitués par une roue mobile 14 et une roue fixe 26 directement adjacente à cette roue mobile 14.

La longueur des aubes mobiles 18 est telle que leurs sommets 30 avoisinent sans toucher le carter extérieur 8. Par conséquent, les jeux fonctionnels situés entre les sommets 30 des aubes mobiles 18 et le carter extérieur 8 ne sont pas négligeables. De manière analogue, le diamètre de l'anneau 110 est tel que celui-ci avoisine sans toucher les reliefs 20 formant des labyrinthes du carter intérieur 4. Par conséquent, les jeux fonctionnels situés entre les sommets 32 des aubes fixes 22 et les reliefs 20 du carter intérieur 4 ne sont pas négligeables.

Malgré leur dimensionnement réduit, les jeux fonctionnels définissent des passages 34, 36, dans lesquels s'écoulent des écoulements d'air parasite 38, 40. C'est ainsi qu'un écoulement secondaire de couche limite extérieure, désigné à la figure 1 par les flèches 38 s'écoule dans une veine extérieure 34 définie entre le carter extérieur 8 et les sommets 30 des aubes mobiles 18. De manière analogue, un écoulement secondaire de couche limite intérieure, désigné à la figure 1 par les flèches 40 s'écoule dans une veine intérieure 36 définie entre le carter intérieur 4 et les sommets 32 des aubes fixes 22.

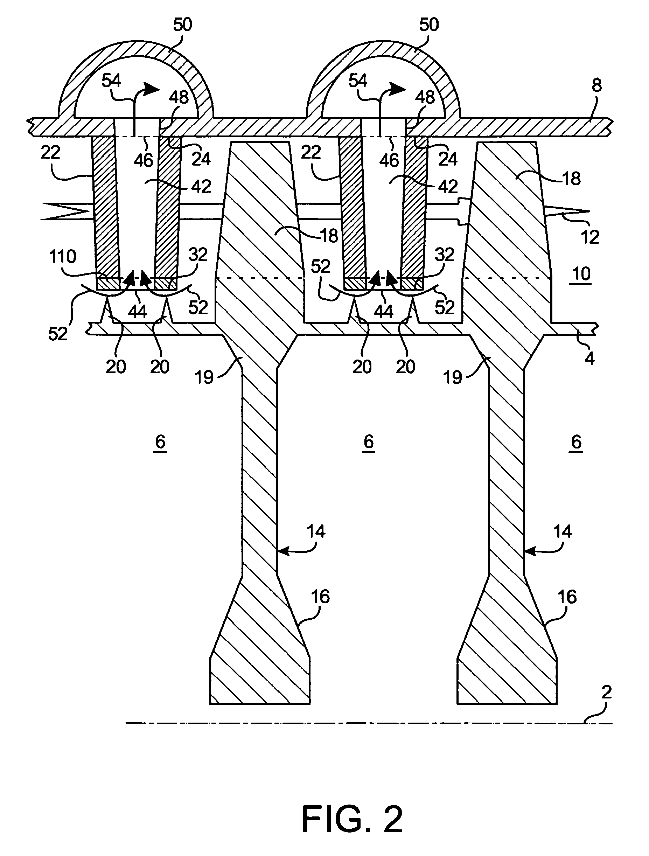

Sur les figures 2 à 9 sont illustrés des modes de réalisation particuliers du procédé de circulation d'air et de l'agencement de compresseur selon l'invention. Chaque fois, le compresseur est du type de celui qui est illustré sur la figure 1, par conséquent les mêmes éléments sont désignés par les mêmes références numériques, et certaines références numériques seront omises afin de simplifier les figures.

Sur la figure 2 est illustré un premier mode de réalisation du procédé de circulation d'air et de l'agencement de compresseur selon l'invention, selon une coupe longitudinale passant par les aubes fixes et par les aubes mobiles.

La figure 2 représente schématiquement deux étages de compression 28 du compresseur, constitués chacun d'une roue fixe 26 et d'une roue mobile 14, la roue fixe 26 étant en amont de la roue mobile 14.

Les aubes fixes 22 comportent chacune une cavité intérieure 42. La cavité intérieure 42 débouche dans la veine intérieure 36 au sommet 32 de l'aube fixe 22 par un orifice 44 qui se trouve sensiblement en regard des reliefs 20 formant labyrinthes sur le carter intérieur 4 du côté de la veine 10. Chaque cavité intérieure 42 débouche à la base 24 de l'aube fixe 22 par un orifice 46 qui communique avec une ouverture traversante 48 du carter extérieur 8. Chaque ouverture traversante 48 débouche à son tour à l'extérieur du carter extérieur 8 dans un collecteur 50.

Il découle de cet agencement de l'étage de compression que l'air provenant de la couche limite intérieure 36 est aspiré dans les cavités 42 à travers les orifices 44, comme l'indiquent les flèches 52.

Puis l'air aspiré dans les cavités 42 est conduit à l'intérieur des aubes fixes 22 jusqu'à leur base 24, et traverse successivement leur orifice 46 et l'ouverture traversante 48 correspondante du carter extérieur 8 avec laquelle communique cet orifice 46. L'air est ensuite collecté, comme l'indiquent les flèches 54, dans les collecteurs 50 dont la pression de fonctionnement est inférieure à la pression des orifices de prélèvement d'air 44, 46, du fait que ce collecteur 50 est relié à une enceinte appropriée de la turbomachine.

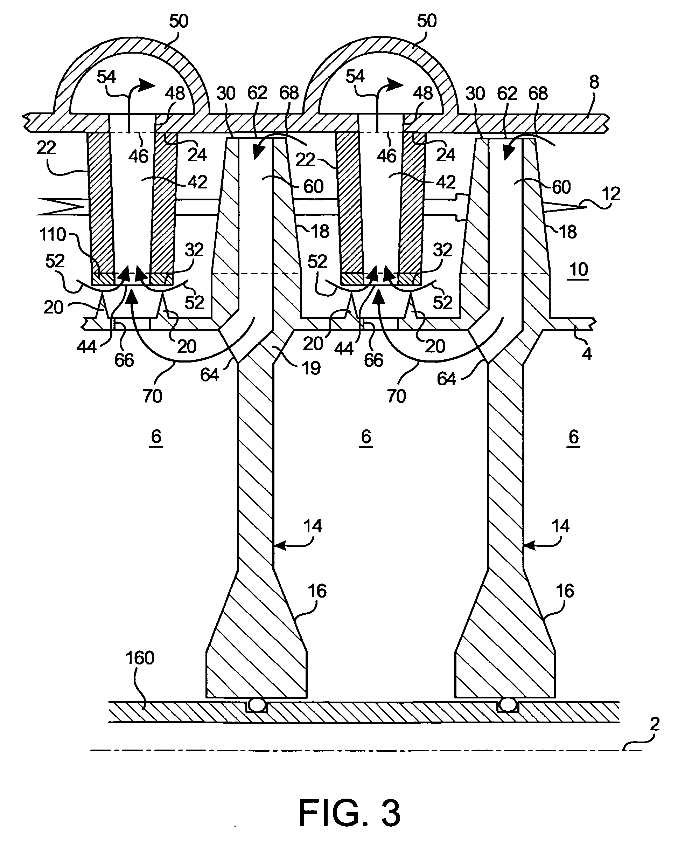

Sur la figure 3 est illustré un deuxième mode de réalisation du procédé de circulation d'air et de l'agencement de compresseur selon l'invention, selon une coupe longitudinale passant par les aubes fixes et par les aubes mobiles.

La figure 3 représente schématiquement deux étages de compression 28 du compresseur, constitués chacun d'une roue fixe 26 et d'une roue mobile 14, la roue fixe 26 étant en amont de la roue mobile 14.

Les aubes fixes 22 comportent chacune une cavité intérieure 42. La cavité intérieure 42 débouche dans la veine intérieure 36 au sommet 32 de l'aube fixe 22 par un orifice 44 qui se trouve sensiblement en regard des reliefs 20 formant labyrinthes sur le carter intérieur 4 du côté de la veine 10. Chaque cavité intérieure 42 débouche à la base 24 de l'aube fixe 22 par un orifice 46 qui communique avec une ouverture traversante 48 du carter extérieur 8. Chaque ouverture traversante 48 débouche à son tour à l'extérieur du carter extérieur 8 dans un collecteur 50.

De plus, les aubes mobiles 18 comportent chacune une cavité intérieure 60. La cavité intérieure 60 débouche dans la veine extérieure 34 au sommet 30 de l'aube mobile 18 par un orifice 62 qui se trouve en regard du carter extérieur 8. La cavité intérieure 60 débouche à la base 19 de l'aube mobile 18 par un orifice 64 qui débouche dans une enceinte intérieure 6, du côté amont de la roue mobile 14.

Chaque étage de compression comporte une enceinte intérieure 6. Les enceintes intérieures 6 sont donc à des pressions différentes et ne doivent pas communiquer entre elles. A cet effet, il est prévu un système d'étanchéité 160 qui coopère avec chacun des disques 16.

Par ailleurs, le carter intérieur 4 comporte des ouvertures traversantes 66 qui font communiquer les enceintes intérieures 6 avec la veine intérieure 36 au niveau des labyrinthes qui sont en regard des roues fixes 26, en amont des roues mobiles 14. Sur l'exemple illustré, les ouvertures traversantes 66 se présentent sous la forme de trous orientés radialement.

Il découle de cet agencement de l'étage de compression que l'air provenant de la couche limite extérieure 34 est aspiré dans les cavités intérieures 60 des aubes mobiles 18 à travers les orifices 62, comme l'indique la flèche 68.

Puis cet air aspiré (flèche 68) est conduit à l'intérieur de chaque aube mobile 18 jusqu'à sa base 19, et traverse l'orifice 64 de l'aube mobile 18 pour arriver dans une enceinte intérieure 6, en amont de la roue mobile 14.

L'air est ensuite aspiré à travers les ouvertures traversantes 66 du carter intérieur 4, et est aspiré dans les cavités 42 des aubes fixes 22 de la roue fixe 26 située juste en amont de la roue mobile 14, à travers les orifices 44, comme l'indique la flèche 70.

Simultanément, l'air provenant de la couche limite intérieure 36 est aspiré dans les cavités 42 à travers les orifices 44, comme l'indiquent les flèches 52.

Puis l'air aspiré dans les cavités 42 (flèches 52 et flèche 70) est conduit à l'intérieur des aubes fixes 22 jusqu'à leur base 24, et traverse successivement leur orifice 46 et l'ouverture 48 du carter extérieur 8 avec laquelle communique cet orifice 46. L'air est ensuite collecté, comme l'indiquent les flèches 54, dans les collecteurs 50 dont la pression de fonctionnement est inférieure à la pression des orifices de prélèvement d'air 44, 46, 62, 64, du fait que ce collecteur 50 est relié à une enceinte appropriée de la turbomachine.

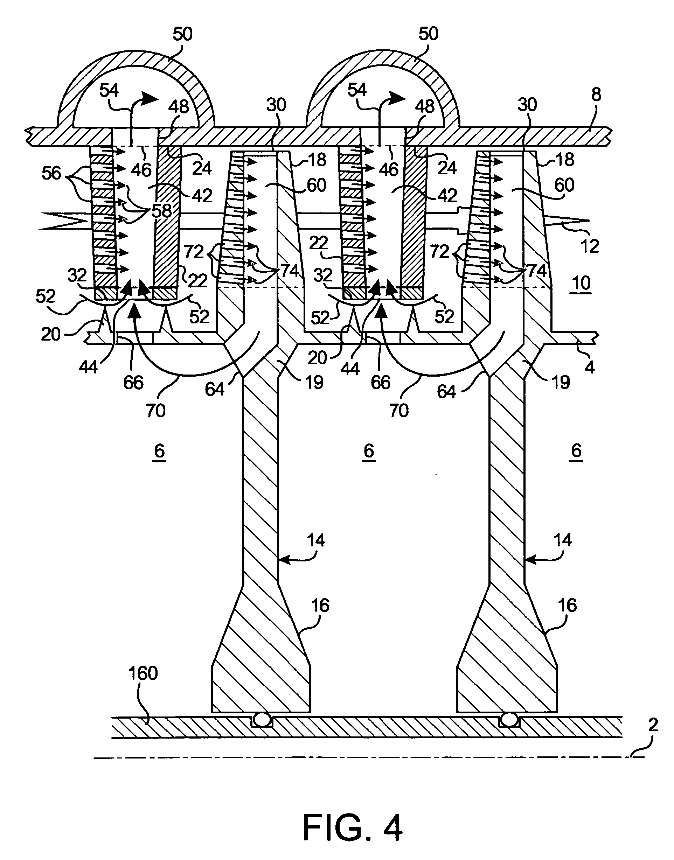

Sur la figure 4 est illustré un troisième mode de réalisation du procédé de circulation d'air et de l'agencement de compresseur selon l'invention, selon une coupe longitudinale passant par les aubes fixes et par les aubes mobiles.

La figure 4 représente schématiquement deux étages de compression 28 du compresseur, constitués chacun d'une roue fixe 26 et d'une roue mobile 14, la roue fixe 26 étant en amont de la roue mobile 14.

Les aubes fixes 22 comportent chacune une cavité intérieure 42. La cavité intérieure 42 débouche dans la veine intérieure 36 au sommet 32 de l'aube fixe 22 par un orifice 44 qui se trouve sensiblement en regard des reliefs 20 formant labyrinthes sur le carter intérieur 4 du côté de la veine 10. Chaque cavité intérieure 42 débouche à la base 24 de l'aube fixe 22 par un orifice 46 qui communique avec une ouverture traversante 48 du carter extérieur 8. Chaque ouverture traversante 48 débouche à son tour à l'extérieur du carter extérieur 8 dans un collecteur 50.

Les aubes fixes 22 comportent en outre au moins un orifice traversant latéral 56, situé sur l'extrados du profil, qui met en communication le côté situé en amont de l'aube fixe 22 avec sa cavité intérieure 42.

De plus, les aubes mobiles 18 comportent chacune une cavité intérieure 60. La cavité intérieure 60 ne débouche pas dans la veine extérieure 34 au sommet 30 de l'aube mobile 18. La cavité intérieure 60 débouche à la base 19 de l'aube mobile 18 par un orifice 64 qui débouche dans une enceinte intérieure 6, du côté amont de la roue mobile 14.

Un système d'étanchéité 160, qui coopère avec chacun des disques 16, est prévu.

Les aubes mobiles 18 comportent en outre au moins un orifice traversant latéral 72, situé sur l'extrados du profil, qui met en communication le côté situé en amont de l'aube mobile 18 avec sa cavité intérieure 60.

Il à noter que, sur la figure 4, ainsi que sur les autres figures, les orifices traversants 56, respectivement 72, sont représentés et positionnés de manière purement schématique.

Par ailleurs, le carter intérieur 4 comporte des ouvertures traversantes 66 qui font communiquer les enceintes intérieures 6 avec la veine intérieure 36 au niveau des labyrinthes qui sont en regard des roues fixes 26, en amont des roues mobiles 14.

Il découle de cet agencement de l'étage de compression que l'air provenant de la couche limite de l'extrados de chaque aube mobile 18 est aspiré dans sa cavité intérieure 60 à travers l'(les) orifice(s) traversant(s) 72, comme l'indiquent les flèches 74.

Puis cet air aspiré est conduit à l'intérieur de chaque aube mobile 18 jusqu'à sa base 19, et traverse l'orifice 64 de l'aube mobile 18 pour arriver dans l'enceinte intérieure 6, en amont de la roue mobile 14.

L'air est ensuite aspiré à travers les ouvertures traversantes 66 du carter intérieur 4, et est aspiré dans les cavités 42 des aubes fixes 22 de la roue fixe 26 située juste en amont de la roue mobile 14, à travers les orifices 44, comme l'indique la flèche 70.

Simultanément, l'air provenant de la couche limite intérieure 36 est aspiré dans les cavités 42 à travers les orifices 44, comme l'indiquent les flèches 52.

Simultanément, l'air provenant de la couche limite de l'extrados de chaque aube fixe 22 est aspiré dans sa cavité intérieure 42 à travers l'(les) orifice(s) traversant(s) 56, comme l'indiquent les flèches 58.

Puis l'air aspiré dans les cavités 42 (flèches 52, flèche 70 et flèches 58) est conduit à l'intérieur des aubes fixes 22 jusqu'à leur base 24, et traverse successivement leur orifice 46 et l'ouverture 48 du carter extérieur 8 avec laquelle communique cet orifice 46. L'air est ensuite collecté, comme l'indiquent les flèches 54, dans les collecteurs 50 dont la pression de fonctionnement est inférieure à la pression des orifices de prélèvement d'air 44, 46, 56, 64, 72, du fait que ce collecteur 50 est relié à une enceinte appropriée de la turbomachine.

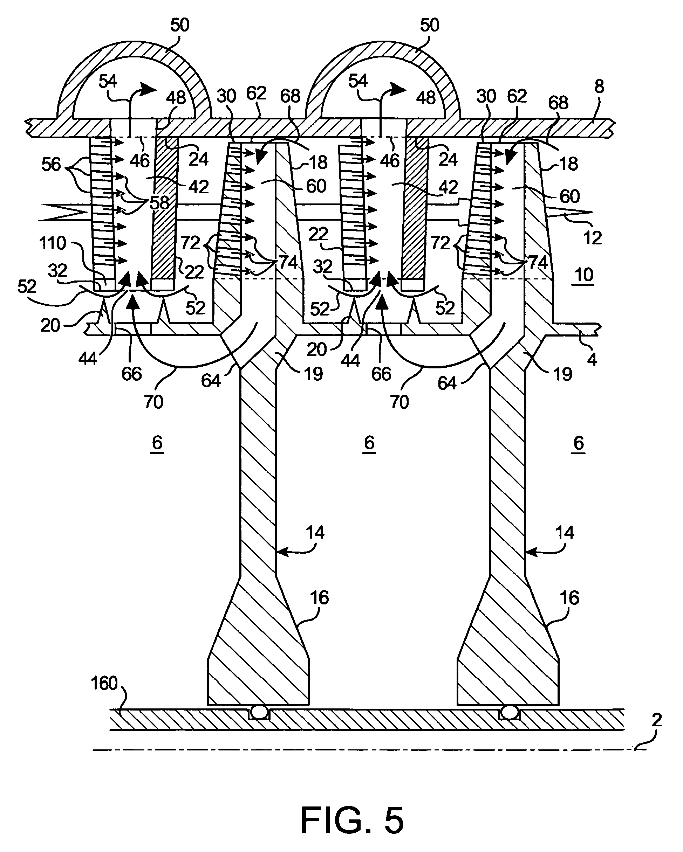

Sur la figure 5 est illustré un quatrième mode de réalisation du procédé de circulation d'air et de l'agencement de compresseur selon l'invention, selon une coupe longitudinale passant par les aubes fixes et par les aubes mobiles.

La figure 5 représente schématiquement deux étages de compression 28 du compresseur, constitués chacun d'une roue fixe 26 et d'une roue mobile 14, la roue fixe 26 étant en amont de la roue mobile 14.

Les aubes fixes 22 comportent chacune une cavité intérieure 42. La cavité intérieure 42 débouche dans la veine intérieure 36 au sommet 32 de l'aube fixe 22 par un orifice 44 qui se trouve sensiblement en regard des reliefs 20 formant labyrinthes sur le carter intérieur 4 du côté de la veine 10. Chaque cavité intérieure 42 débouche à la base 24 de l'aube fixe 22 par un orifice 46 qui communique avec une ouverture traversante 48 du carter extérieur 8. Chaque ouverture traversante 48 débouche à son tour à l'extérieur du carter extérieur 8 dans un collecteur 50.

Les aubes fixes 22 comportent en outre au moins un orifice traversant latéral 56, situé sur l'extrados du profil, qui met en communication le côté situé en amont de l'aube fixe 22 avec sa cavité intérieure 42.

De plus, les aubes mobiles 18 comportent chacune une cavité intérieure 60. La cavité intérieure 60 débouche dans la veine extérieure 34 au sommet 30 de l'aube mobile 18 par un orifice 62 qui se trouve en regard du carter extérieur 8. La cavité intérieure 60 débouche à la base 19 de l'aube mobile 18 par un orifice 64 qui débouche dans l'enceinte intérieure 6, du côté amont de la roue mobile 14.

Un système d'étanchéité 160, qui coopère avec chacun des disques 16, est prévu.

Les aubes mobiles 18 comportent en outre au moins un orifice traversant latéral 72, situé sur l'extrados du profil, qui met en communication le côté situé en amont de l'aube mobile 18 avec sa cavité intérieure 60.

Par ailleurs, le carter intérieur 4 comporte des ouvertures traversantes 66 qui font communiquer les enceintes intérieures 6 avec la veine intérieure 36 au niveau des labyrinthes qui sont en regard des roues fixes 26, en amont des roues mobiles 14.

Il découle de cet agencement de l'étage de compression que l'air provenant de la couche limite de l'extrados de chaque aube mobile 18 est aspiré dans sa cavité intérieure 60 à travers l'(les) orifice(s) traversant(s) 72, comme l'indiquent les flèches 74.

Simultanément, l'air provenant de la couche limite extérieure 34 est aspiré dans les cavités intérieures 60 des aubes mobiles 18 à travers les orifices 62, comme l'indique la flèche 68.

Puis cet air aspiré (flèches 74 et flèche 68) est conduit à l'intérieur de chaque aube mobile 18 jusqu'à leur base 19, et traverse l'orifice 64 de l'aube mobile 18 pour arriver dans une enceinte intérieure 6, en amont de la roue mobile 14.

L'air est ensuite aspiré à travers les ouvertures traversantes 66 du carter intérieur 4, et est aspiré dans les cavités 42 des aubes fixes 22 de la roue fixe 26 située juste en amont de la roue mobile 14, à travers les orifices 44, comme l'indique la flèche 70.

Simultanément, l'air provenant de la couche limite intérieure 36 est aspiré dans les cavités 42 à travers les orifices 44, comme l'indiquent les flèches 52.

Simultanément, l'air provenant de la couche limite de l'extrados de chaque aube fixe 22 est aspiré dans sa cavité intérieure 42 à travers l'(les) orifice(s) traversant(s) 56, comme l'indiquent les flèches 58.

Puis l'air aspiré dans les cavités 42 (flèches 52, flèche 70 et flèches 58) est conduit à l'intérieur des aubes fixes 22 jusqu'à leur base 24, et traverse successivement leur orifice 46 et l'ouverture 48 du carter extérieur 8 avec laquelle communique cet orifice 46. L'air est ensuite collecté, comme l'indiquent les flèches 54, dans les collecteurs 50 dont la pression de fonctionnement est inférieure à la pression des orifices de prélèvement d'air 44, 46, 56, 62, 64, 72, du fait que ce collecteur 50 est relié à une enceinte appropriée de la turbomachine.

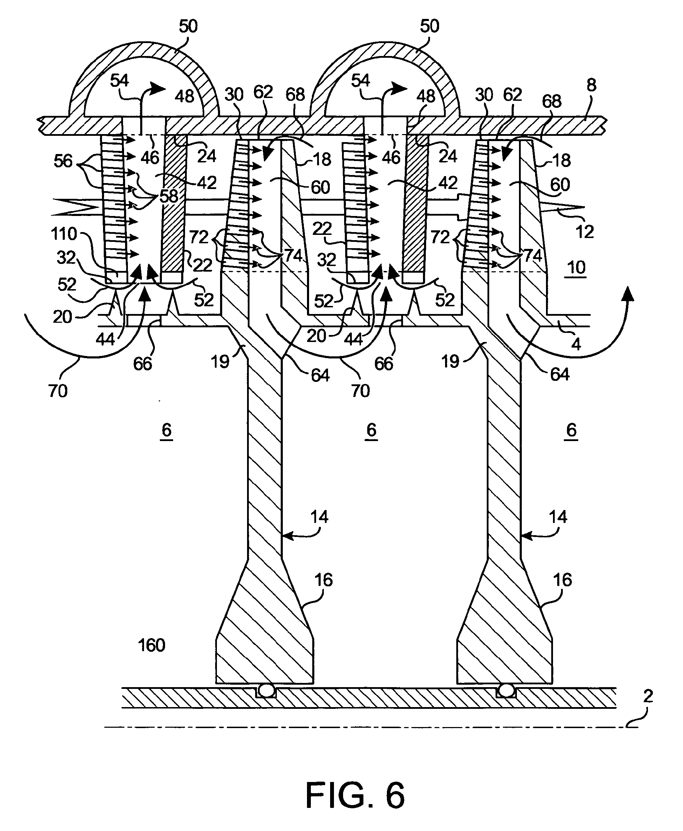

Sur la figure 6 est illustré un cinquième mode de réalisation du procédé de circulation d'air et de l'agencement de compresseur selon l'invention, selon une coupe longitudinale passant par les aubes fixes et par les aubes mobiles.

La figure 6 représente schématiquement deux étages de compression 28 du compresseur, constitués chacun d'une roue fixe 26 et d'une roue mobile 14, la roue fixe 26 étant en amont de la roue mobile 14.

Ce cinquième mode de réalisation est une alternative au quatrième mode de réalisation. Il en diffère en ce que la cavité intérieure 60 des aubes mobiles 18 débouche à la base 19 de l'aube mobile 18 par un orifice 64 qui débouche dans l'enceinte intérieure 6, du côté aval de la roue mobile 14, et non pas du côté amont de celle-ci.

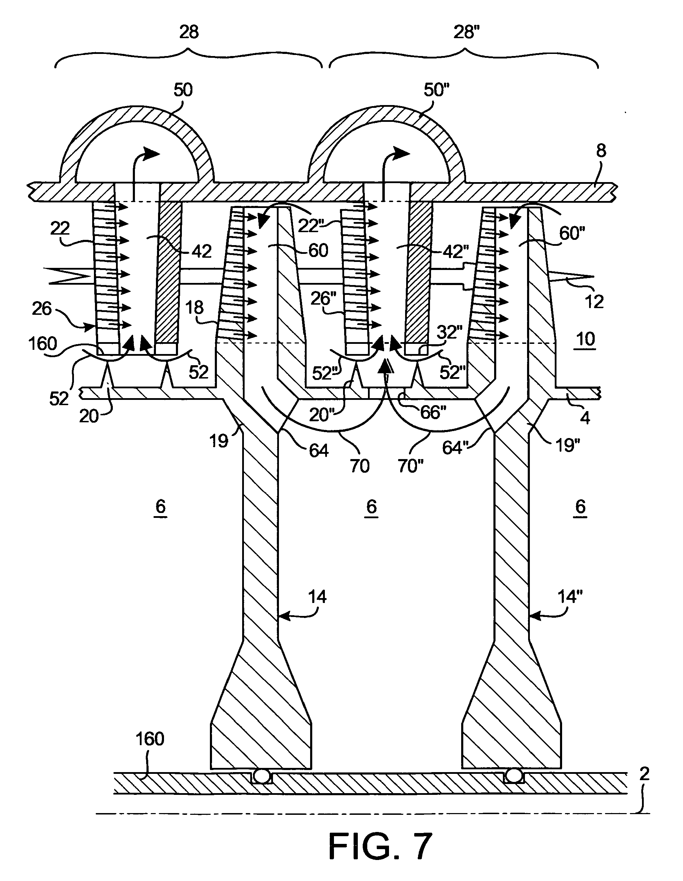

Sur la figure 7 est illustré un sixième mode de réalisation du procédé de circulation d'air et de l'agencement de compresseur selon l'invention, selon une coupe longitudinale passant par les aubes fixes et par les aubes mobiles.

La figure 7 représente schématiquement deux étages de compression 28, 28" du compresseur, constitués chacun d'une roue fixe 26, 26" et d'une roue mobile 14, 14", la roue fixe 26, 26" étant en amont de la roue mobile 14, 14".

Ce sixième mode de réalisation est une autre alternative au quatrième mode de réalisation. Selon le sixième mode de réalisation, les cavités intérieures 60, 60" des aubes mobiles 18, 18" débouchent à la base 19, 19" de l'aube mobile 18, 18" correspondante par un orifice 64, 64" qui débouche dans l'enceinte intérieure 6. Selon cette variante de réalisation, l'orifice 64 de l'aube mobile amont 18 débouche du côté aval de la roue mobile amont 14, tandis que l'orifice 64" de l'aube mobile aval 18" débouche du côté amont de la roue mobile aval 14".

Il découle de cet agencement que l'air provenant de l'orifice 64" de la roue mobile aval 14" est aspiré à travers les ouvertures traversantes 66" du carter intérieur 4 qui sont en regard des labyrinthes situés au niveau de la roue fixe aval 26", comme l'indique la flèche 70", de manière analogue aux modes de réalisation décrits précédemment. Il découle également de cet agencement que l'air provenant de l'orifice 64 de la roue mobile amont 14 est aspiré à travers ces mêmes ouvertures traversantes 66" situées au niveau de la roue fixe aval 26", comme l'indique la flèche 70. Ainsi, l'air provenant à la fois des aubes mobiles aval 18" et des aubes mobiles amont 18 est aspiré à travers ces ouvertures traversantes aval 66" dans les cavités 42" des aubes fixes 22" de la roue fixe aval 26".

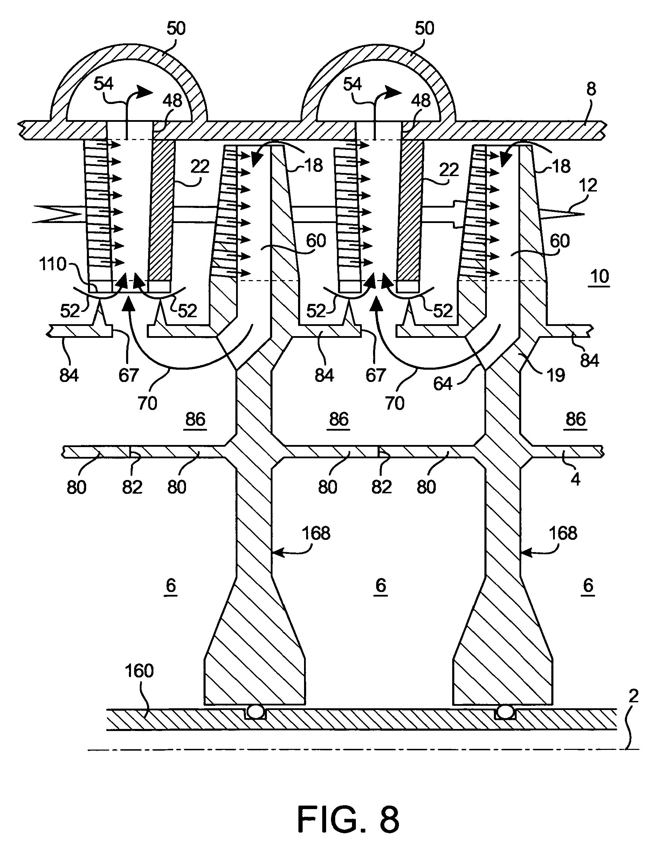

Sur la figure 8 est illustré un septième mode de réalisation du procédé de circulation d'air et de l'agencement de compresseur selon l'invention, selon une coupe longitudinale passant par les aubes fixes et par les aubes mobiles.

Ce septième mode de réalisation est encore une autre alternative au quatrième mode de réalisation. Il peut être combiné avec le cinquième ou avec le sixième modes de réalisation ci-dessus décrits. Ce septième mode de réalisation va être décrit uniquement en ce qui concerne ses différences avec les modes de réalisation qui précèdent.

La figure 8 représente schématiquement deux étages de compression 28 du compresseur, constitués chacun d'une roue fixe 26 et d'une roue mobile 14, la roue fixe 26 étant en amont de la roue mobile 14.

Ce septième mode de réalisation est particulièrement adapté aux compresseurs dont les roues mobiles 14 comportent des disques aubagés monoblocs 168 dans lesquels le disque 16 et l'aube mobile 18 sont formés d'un seul tenant.

Les disques aubagés monoblocs 168 sont reliés entre eux sensiblement sous la base 19 des aubes mobiles 18, par des viroles 80 assemblées entre elles par un plan de soudure médian 82. Ces viroles 80 soudées entre elles forment ainsi le carter intérieur 4, qui, conjointement avec chaque couple de deux disques aubagés monoblocs 168 constitue le rotor du compresseur.

Une virole intermédiaire 84, située entre le carter intérieur 4 et le carter extérieur 8 s'étend de part et d'autre du disque monobloc 168, et délimite, avec le carter intérieur 4, une enceinte intermédiaire 86. La veine 10 est, selon ce septième mode de réalisation, délimitée entre le carter extérieur 8 et la base des aubes fixes 22 et des aubes mobiles 18. Les reliefs 20 formant des labyrinthes sont réalisés sur la virole intermédiaire 84, du côté de la veine 10, sur des portions situées en regard des aubes fixes 22. Au niveau de ces labyrinthes, le carter intermédiaire 84 comporte une ouverture traversante 67, qui se présente, sur l'exemple illustré, sous la forme d'une fente continue orientée radialement. Cette ouverture traversante 67 a une fonction analogue à celle des ouvertures traversantes 66 du carter intérieur 4 des modes de réalisation décrits précédemment.

Il découle de cet agencement que l'air provenant de l'orifice 64 de l'aube mobile 18 et arrive dans une enceinte intermédiaire 86, en amont de la roue mobile 14. Puis cet air est aspiré à travers l'ouverture traversante 67 du carter intermédiaire 84, et est aspiré dans les cavités 42 de l'aube fixe 22, comme l'indique la flèche 70.

Suivant ce mode de réalisation, les enceintes intermédiaires 86 sont, par construction, indépendantes en pression d'un étage de compression à l'autre. Par conséquent, il n'est pas nécessaire de prévoir un système d'étanchéité 160 comme celui des modes de réalisation précédents.

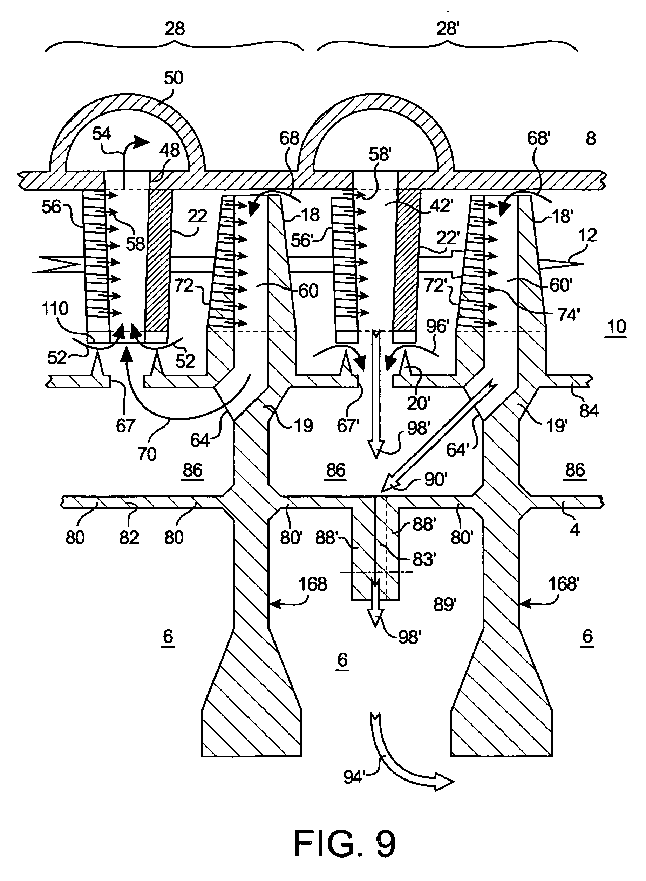

Sur la figure 9 est illustré un huitième mode de réalisation du procédé de circulation d'air et de l'agencement de compresseur selon l'invention, selon une coupe longitudinale passant par les aubes fixes et par les aubes mobiles.

Ce huitième mode de réalisation est une variante possible du septième mode de réalisation. Il peut être combiné avec le cinquième ou avec le sixième modes de réalisation ci-dessus décrits. Ce huitième mode de réalisation va être décrit en ce qui concerne ses différences avec les modes de réalisation qui précèdent.

La figure 9 représente schématiquement deux étages de compression 28, 28' du compresseur, constitués chacun d'une roue fixe 26, 26' et d'une roue mobile 14, 14', la roue fixe 26, 26' étant en amont de la roue mobile 14, 14'.

Ce huitième mode de réalisation est particulièrement adapté aux compresseurs dont les roues mobiles 14, 14' comportent des disques aubagés monobloc 168, 168' dans lesquels le disque 16, 16' et l'aube mobile 18, 18' sont formés d'un seul tenant.

Les disques aubagés monobloc 168, 168' sont reliés entre eux sensiblement sous la base 19, 19' des aubes mobiles 18, 18', par des viroles 80, 80'.

De manière analogue au septième mode de réalisation, une virole intermédiaire 84, située entre le carter intérieur 4 et le carter extérieur 8, relie entre elles les aubes mobiles 18, 18' sensiblement au niveau de leur base 19, 19', et délimite, avec les bases 19, 19' des aubes mobiles 18, 18' et avec le carter intérieur 4 une enceinte intermédiaire 86. La veine 10 est délimitée entre le carter extérieur 8 et la virole intermédiaire 84. Les reliefs 20, 20' formant des labyrinthes sont réalisés sur la virole intermédiaire 84, du côté de la veine 10, sur des portions situées en regard des aubes fixes 22, 22'. Au niveau de ces labyrinthes, la virole intermédiaire 84 comporte des ouvertures traversantes continues 67, 67', sensiblement en regard de chaque aube fixe 22, 22'.

Pour l'étage de compression 28 situé à gauche sur la figure 9, les viroles 80 sont assemblées entre elles par un plan de soudure 82, de manière analogue au septième mode de réalisation précédemment décrit.

Pour l'étage de compression 28' situé à droite sur la figure 9, les viroles 80' sont assemblées entre elles par des brides de liaison 88'.

L'ensemble des viroles 80, respectivement des viroles 80', situées entre les disques aubagés monoblocs 168, 168', constitue le carter intérieur 4.

Les brides de liaison 88' sont maintenues ensemble par des moyens de maintien 89', tel que par exemple des vis, et définissent entre elles un conduit d'aspiration 83' orienté radialement. Le conduit d'aspiration 83' se trouve situé sensiblement en regard de l'ouverture traversante 67'. Il met en communication l'enceinte intermédiaire 86 avec l'enceinte intérieure 6 entre les disques aubagés monobloc 168, 168'.

Les deux étages de compression 28, 28' se comportent différemment, du fait de leurs agencements différents.

Pour l'étage de compression 28, à gauche sur la figure 9, de manière analogue au septième mode de réalisation, l'air provenant de la couche limite de l'aube mobile 18 est aspiré dans sa cavité intérieure 60 à travers l'(les) orifice(s) traversant(s) 72, comme l'indiquent les flèches 74.

Simultanément, l'air provenant de la couche limite extérieure 34 est aspiré dans les cavités intérieures 60 des aubes mobiles 18 à travers les orifices 62, comme l'indique la flèche 68.

Puis cet air aspiré (flèches 58 et 68) est conduit à l'intérieur de l'aube mobile 18 jusqu'à sa base 19, et traverse l'orifice 64 de l'aube mobile 18 pour arriver dans l'enceinte intermédiaire 86, en amont du disque aubagé monobloc 168.

L'air est ensuite aspiré à travers l'ouverture traversante 67 de la virole intermédiaire 84, et est aspiré dans les cavités 42 des aubes fixes 22 de la roue fixe 26 située juste en amont du disque aubagé monobloc 168, à travers les orifices 44, comme l'indique la flèche 70.

Simultanément, l'air provenant de la couche limite intérieure 36 est aspiré dans les cavités 42 à travers les orifices 44, comme l'indiquent les flèches 52.

Simultanément, l'air provenant de la couche limite de l'extrados de chaque aube fixe 22 est aspiré dans sa cavité intérieure 42 à travers l'(les) orifice(s) traversant(s) 56, comme l'indiquent les flèches 58.

Puis l'air aspiré dans les cavités 42 (flèches 52, flèche 70 et flèches 58) est conduit à l'intérieur des aubes fixes 22 jusqu'à leur base 24, et traverse successivement leur orifice 46 et l'ouverture 48 du carter extérieur 8 avec laquelle communique cet orifice 46. L'air est ensuite collecté, comme l'indiquent les flèches 54, dans le collecteur 50 dont la pression de fonctionnement est inférieure à la pression des orifices de prélèvement d'air 44, 46, 56, 64, 72, du fait que ce collecteur 50 est relié à une enceinte adéquate de la turbomachine.

Pour l'étage de compression 28', à droite sur la figure 9, l'air provenant de la couche limite de l'aube mobile 18' est aspiré dans sa cavité intérieure 60' à travers l'(les) orifice(s) traversant(s) 72', comme l'indiquent les flèches 74'.

Simultanément, l'air provenant de la couche limite extérieure 34 est aspiré dans les cavités intérieures 60' des aubes mobiles 18' à travers les orifices 62', comme l'indique la flèche 68'. Puis cet air aspiré (flèches 74' et 68') est conduit à l'intérieur de l'aube mobile 18' jusqu'à sa base 19', et traverse l'orifice 64' de l'aube mobile 18', comme l'indique la flèche 90', pour arriver dans l'enceinte intermédiaire 86, en amont du disque aubagé monobloc 168'.

Simultanément, l'air provenant de la couche limite intérieure 36 est aspiré à travers l'ouverture traversante 67' de la virole intermédiaire 84, comme l'indique la flèche 96', pour arriver dans l'enceinte intermédiaire 86.

Simultanément, l'air provenant de la couche limite de l'extrados de chaque aube fixe 22 est aspiré dans sa cavité intérieure 42 à travers l'(les) orifice(s) traversant(s) 56, comme l'indiquent les flèches 58'. Puis l'air aspiré dans les cavités 42' (flèches 58') est conduit à l'intérieur des aubes fixes 22' jusqu'à leur sommet 32'. Puis cet air est aspiré à travers l'ouverture traversante 67' de la virole intermédiaire 84, comme l'indique la flèche 98', pour arriver dans l'enceinte intermédiaire 86.

Puis l'air provenant à la fois des aubes mobiles 18', de la couche limite intérieure 36 et des aubes fixes 22' est ensuite aspiré, comme l'indique la flèche 92', à travers les conduis 83' ménagés entre les brides de liaison 88' des viroles 80', et s'écoule dans l'enceinte intérieure 6, d'où il peut être conduit dans d'autres parties de la turbomachine, comme l'indique la flèche 94'.

Avec cet agencement des deux étages de compresseur 28, 28' selon le huitième mode de réalisation, l'air aspiré au niveau de l'étage de compresseur 28 à gauche sur la figure 9, est transféré vers l'extérieur du compresseur, et l'air aspiré au niveau de l'étage de compresseur 28', à droite sur la figure 9, est transféré vers l'intérieur du compresseur.

Le huitième mode de réalisation vient d'être décrit dans le cas où l'air aspiré dans l'enceinte intermédiaire 86 provient à la fois :
- de la couche limite intérieure (flèches 96'),
- de la couche limite extérieure (flèches 68'), par l'intermédiaire des cavités 60' des aubes mobiles 18' (flèches 90'),
- de la couche limite de l'extrados des aubes mobiles (flèches 74'), par l'intermédiaire des cavités 60' des aubes mobiles (flèches 90'),
- de la couche limite de l'extrados des aubes fixes (flèches 58'), par l'intermédiaire des cavités 42' des aubes fixes (flèches 98').

Une première alternative (non explicitement représentée) de ce huitième mode de réalisation concerne le cas où les aubes fixes 22' ne comportent pas d'orifices traversants 56' et les aubes mobiles 18' ne comportent pas d'orifices traversants 72'. L'air aspiré dans l'enceinte intermédiaire 86 provient alors uniquement de la couche limite intérieure (flèches 96') et de la couche limite extérieure (flèches 68').

Une deuxième alternative (non explicitement représentée) de ce huitième mode de réalisation concerne le cas où les aubes mobiles 18' ne comportent pas d'orifice 62' à leur sommet 30'. L'air aspiré dans l'enceinte intermédiaire 86 provient alors uniquement de la couche limite intérieure (flèches 96'), de la couche limite de l'extrados des aubes mobiles (flèches 74') et de la couche limite de l'extrados des aubes fixes (flèches 98').

Une troisième alternative (non explicitement représentée) de ce huitième mode de réalisation concerne le cas où les aubes fixes 22' ne comportent pas d'orifices traversants 56' et les aubes mobiles 18' ne comportent pas d'orifices traversants 72' ni d'orifice 62' à leur sommet. L'air aspiré dans l'enceinte intermédiaire 86 provient alors uniquement de la couche limite intérieure (flèches 96').

Dans les troisième à huitième modes de réalisation qui viennent d'être décrits, les orifices traversants 56 et/ou 72 peuvent être des trous ou des fentes ou une paroi poreuse ou tout autre moyen connu par l'homme du métier pour aspirer la couche limite se développant autour des aubes. Leur nombre est déterminé en fonction des dimensions de la veine 10, et des dimensions des aubes fixes 22 et/ou des aubes mobiles 18.

De manière commune à tous les modes de réalisation qui viennent d'être décrits, le dimensionnement de la cavité intérieure 42 d'une aube fixe 22, respectivement de la cavité intérieure 60 d'une aube mobile 18, est augmenté lorsque cette aube fixe 22, respectivement cette aube mobile 18, reçoit de l'air aspiré à travers un (des) orifice(s) traversant(s) 56, respectivement à travers un (des) orifice(s) traversant(s) 72, en supplément de l'air provenant de la couche limite intérieure 36, respectivement de la couche limite extérieure 38. En variante, les cavités 42 des aubes fixes 22 peuvent être des cavités multiples, et/ou les cavités 60 des aubes mobiles 18 peuvent être des cavités multiples. Cela permet à l'agencement de compresseur d'être adapté à différents niveaux de pression possibles.

En outre, dans la cavité intérieure 42 d'une aube fixe 22, respectivement dans la cavité intérieure 60 d'une aube mobile 18, les différents débits d'air aspiré peuvent être mêlés, ou bien peuvent être acheminés à travers ladite cavité 42, 60 par l'intermédiaire de conduits distincts.

Pour tous les modes de réalisation qui ont été décrits ci-dessus ainsi que pour leurs différentes variantes, l'air qui se trouve dans les collecteurs 50 peut ensuite être renvoyé vers une autre partie de la turbomachine dont le niveau de pression permet l'utilisation, par exemple vers le circuit de refroidissement d'une turbine basse pression ou vers l'alimentation d'enceintes pressurisées, ou bien en direction des prélèvements avionneurs, ou d'autres utilisations.

Par ailleurs, un compresseur peut comporter un ou plusieurs étages de compression comportant un agencement selon l'invention.

### DOCUMENTS CITES

[1] : GB-1 085 227-A
[2] : FR-2 166 494-A5
[3] : FR-2 248 732-A5
[4] : WO-98/30802-A1
[5] : US-6004095-A

## Revendications

1. Procédé de circulation d'air dans un compresseur de turbomachine, ledit compresseur comportant :
- plusieurs étages de compression (28, 28') composés chacun d'une roue aubagée mobile (14, 14') et d'une roue aubagée fixe (26, 26'),
- un carter extérieur (8) et un carter intérieur (4), délimitant une veine (10) dans laquelle se trouvent les aubes mobiles (18, 18') de la roue mobile (14, 14') et les aubes fixes (22, 22') de la roue fixe (26, 26'),
- une partie extérieure de la veine, dite « veine extérieure » (34), correspondant à des jeux fonctionnels entre le carter extérieur (8) et les aubes (18, 18') de la roue mobile (14, 14'), et
- une partie intérieure de la veine, dite « veine intérieure » (36), correspondant à des jeux fonctionnels entre le carter intérieur (4) et les aubes (22, 22') de la roue fixe (26, 26'),
procédé **caractérisé en ce qu'**il comporte, pour au moins un étage de compression (28) comprenant une roue fixe (26) :
- une opération d'aspiration, au cours de laquelle on aspire de l'air présent dans la veine intérieure (36), et on l'envoie (52) dans au moins une aube fixe (22) de ladite roue fixe (26), et
- au moins une opération de prélèvement au cours de laquelle on prélève de l'air dans ladite au moins une aube fixe (22) de ladite roue fixe (26), et on l'envoie (54) à l'extérieur du compresseur.

2. Procédé de circulation d'air selon la revendication 1, **caractérisé en ce qu'**il comporte, en outre, une opération d'aspiration au cours de laquelle :
- on aspire de l'air dans au moins une aube mobile (18) d'au moins une roue mobile (14) adjacente à ladite roue fixe (26), et on l'envoie (70) dans au moins une aube fixe (22) de ladite au moins une roue fixe (26).

3. Procédé de circulation d'air selon la revendication 2, **caractérisé en ce qu'**il comporte, en outre, une opération d'aspiration, au cours de laquelle :
- on aspire de l'air dans la veine extérieure (34) et on l'envoie (68) dans ladite au moins une aube mobile (18) d'au moins une roue mobile (14).

4. Procédé de circulation d'air selon la revendication 2 ou 3, **caractérisé en ce qu'**il comporte, en outre, une opération d'aspiration, au cours de laquelle :
- on aspire de l'air à l'extrados du profil de ladite au moins une aube mobile (18) de ladite au moins une roue mobile (14), et on l'envoie (74) dans ladite au moins une aube mobile (18) de ladite au moins une roue mobile (14), et
- on aspire de l'air à l'extrados du profil de ladite au moins une aube fixe (22) de ladite roue fixe (26), et on l'envoie (58) dans ladite au moins une aube fixe (22) de ladite roue fixe (26).

5. Procédé de circulation d'air selon l'une quelconque des revendications 2 à 4, **caractérisé en ce que** :
- on aspire de l'air dans au moins une aube mobile (18) de la roue mobile (14) située en amont de ladite roue fixe (26) et adjacente à celle-ci, et on l'envoie (70) dans au moins une aube fixe (22) de ladite roue fixe (26).

6. Procédé de circulation d'air selon l'une quelconque des revendications 2 à 4, **caractérisé en ce que** :
- on aspire de l'air dans au moins une aube mobile (18) de la roue mobile (14) située en aval de ladite roue fixe (26) et adjacente à celle-ci, et on l'envoie (70) dans au moins une aube fixe (22) de ladite roue fixe (26).

7. Procédé de circulation d'air selon l'une quelconque des revendications 2 à 4, **caractérisé en ce que** :
- on aspire de l'air dans au moins une aube mobile (18, 18") de chacune des deux roues mobiles (14, 14'') situées de part et d'autre de ladite roue fixe (26), et on l'envoie (70, 70'') dans au moins une aube fixe (22) de ladite roue fixe (26).

8. Procédé de circulation d'air selon l'une quelconque des revendications 1 à 7, **caractérisé en ce que** au cours de ladite opération de prélèvement, l'air prélevé dans ledit étage de compresseur (28) est recueilli dans un collecteur (50) situé à l'extérieur dudit étage de compression (28).

9. Procédé de circulation d'air selon l'une quelconque des revendications 1 à 8, **caractérisé en ce qu'**il comporte, en outre, pour au moins un autre étage de compression (28') comprenant une roue fixe (26') :
- une opération additionnelle d'aspiration, au cours de laquelle on aspire de l'air présent dans la veine intérieure (36), et on l'envoie (96') dans une enceinte intermédiaire (86), et
- une opération additionnelle de prélèvement, au cours de laquelle on prélève de l'air dans ladite enceinte intermédiaire (86), et on l'envoie (92') à l'intérieur du compresseur.

10. Procédé de circulation d'air selon la revendication 9, **caractérisé en ce qu'**il comporte, en outre, une opération additionnelle d'aspiration au cours de laquelle :
- on aspire de l'air dans au moins une aube mobile (18') d'au moins une roue mobile (14') adjacente à ladite roue fixe (26'), et on l'envoie (90') dans ladite enceinte intermédiaire (86).

11. Procédé de circulation d'air selon la revendication 10, **caractérisé en ce qu'**il comporte, en outre, une opération additionnelle d'aspiration, au cours de laquelle :
- on aspire de l'air dans la veine extérieure (34) et on l'envoie (68') dans ladite au moins une aube mobile (18') de ladite au moins une roue mobile (14') .

12. Procédé de circulation d'air selon la revendication 10, **caractérisé en ce qu'**il comporte, en outre, une opération additionnelle d'aspiration, au cours de laquelle :
- on aspire de l'air à l'extrados du profil de ladite au moins une aube mobile (18') de ladite au moins une roue mobile (14'), et on l'envoie (74') dans ladite au moins une aube mobile (18') de ladite au moins une roue mobile (14'), et
- on aspire de l'air à l'extrados du profil de ladite au moins une aube fixe (22') de ladite au moins une roue fixe (26'), et on l'envoie (58') dans ladite au moins une aube fixe (22') de ladite roue fixe (26') .

13. Procédé de circulation d'air selon l'une quelconque des revendications 10 à 12, **caractérisé en ce que** :
- on aspire de l'air dans au moins une aube mobile (18') de la roue mobile (14') située en amont de ladite roue fixe (26') et adjacente à celle-ci, et on l'envoie (90') dans ladite enceinte intermédiaire (86).

14. Procédé de circulation d'air selon l'une quelconque des revendications 10 à 12, **caractérisé en ce que** :
- on aspire de l'air dans au moins une aube mobile (18') de la roue mobile (14') située en aval de ladite roue fixe (26') et adjacente à celle-ci, et on l'envoie (90') dans ladite enceinte intermédiaire (86).

15. Procédé de circulation d'air selon l'une quelconque des revendications 10 à 12, **caractérisé en ce que** :
- on aspire de l'air dans au moins une aube mobile (18') de chacune des deux roues mobiles (14') situées de part et d'autre de ladite roue fixe (26'), et on l'envoie (90') dans ladite enceinte intermédiaire (86).

16. Agencement de compresseur, pour la mise en oeuvre du procédé de circulation d'air selon l'une quelconque des revendications 1 à 15, ledit compresseur comportant :
- plusieurs étages de compression (28, 28') composés chacun d'une roue aubagée mobile (14, 14') et d'une roue aubagée fixe (26, 26'),
- un carter extérieur (8) et un carter intérieur (4), délimitant une veine (10) dans laquelle se trouvent les aubes mobiles (18, 18') de la roue mobile (14, 14') et les aubes fixes (22, 22') de la roue fixe (26, 26'),
- une partie extérieure de la veine, dite « veine extérieure » (34), correspondant à des jeux fonctionnels entre le carter extérieur (8) et les aubes mobiles (18, 18') de la roue mobile (14, 14'), et
- une partie intérieure de la veine, dite « veine intérieure » (36), correspondant à des jeux fonctionnels entre le carter intérieur (4) et les aubes fixe (22, 22') de la roue fixe (26, 26'),
agencement de compresseur **caractérisé en ce qu'**il comporte, pour au moins un étage de compression (28) comportant une roue fixe (26) :
- des premiers moyens d'aspiration (42, 44), pour aspirer de l'air présent dans la veine intérieure (36), et pour envoyer cet air dans au moins une aube fixe (22) de ladite une roue fixe (26), et
- des moyens de prélèvement (48, 50), pour prélever de l'air dans ladite au moins une aube fixe (22) de ladite roue fixe (26) et pour envoyer cet air à l'extérieur du compresseur.

17. Agencement de compresseur selon la revendication 16, **caractérisé en ce qu'**il comporte, en outre :
- des deuxièmes moyens d'aspiration (60, 64, 66), pour aspirer de l'air dans au moins une aube mobile (18) d'au moins une roue mobile (14) adjacente à ladite roue fixe (22), et l'envoyer dans au moins une aube fixe (22) de ladite roue fixe (26).

18. Agencement de compresseur selon la revendication 17, **caractérisé en ce qu'**il comporte, en outre :
- des troisièmes moyens d'aspiration (60, 62), pour aspirer de l'air dans la veine extérieure (34), et l'envoyer dans au moins une aube mobile (18) de ladite au moins une roue mobile (14).

19. Agencement de compresseur selon la revendication 17 ou 18, **caractérisé en ce qu'**il comporte, en outre :
- des quatrièmes moyens d'aspiration (42, 56), pour aspirer de l'air à l'extrados du profil d'au moins une aube fixe (22) de ladite roue fixe (26), et l'envoyer dans ladite au moins une aube fixe (22) de ladite roue fixe (26), et
- des cinquièmes moyens d'aspiration (60, 72), pour aspirer de l'air à l'extrados du profil d'au moins une aube mobile (18) de ladite au moins une roue mobile (14), et l'envoyer directement dans ladite au moins une aube mobile (18) de ladite au moins une roue mobile (14).

20. Agencement de compresseur selon l'une quelconque des revendications 17 à 19, **caractérisé en qu'**il comporte :
- des deuxièmes moyens d'aspiration (60, 64, 66), pour aspirer de l'air dans au moins une aube mobile (18) de la roue mobile (14) située en amont de ladite roue fixe (22), et l'envoyer dans au moins une aube fixe (22) de ladite roue fixe (26).

21. Agencement de compresseur selon l'une quelconque des revendications 17 à 19, **caractérisé en qu'**il comporte :
- des deuxièmes moyens d'aspiration (60, 64, 66), pour aspirer de l'air dans au moins une aube mobile (18) de la roue mobile (14) située en aval de ladite roue fixe (22), et l'envoyer dans au moins une aube fixe (22) de ladite roue fixe (26).

22. Agencement de compresseur selon l'une quelconque des revendications 17 à 19, **caractérisé en qu'**il comporte :
- des deuxièmes moyens d'aspiration (60, 60", 64, 64", 66), pour aspirer de l'air dans au moins une aube mobile (18) de chacune des deux roues mobiles (14) situées de part et d'autre de ladite roue fixe (22), et l'envoyer dans au moins une aube fixe (22) de ladite roue fixe (26).

23. Agencement de compresseur selon l'une quelconque des revendications 16 à 22, **caractérisé en ce que** lesdits premiers moyens d'aspiration (42, 44) comportent une cavité intérieure (42) de ladite aube fixe (22) débouchant par un orifice (44) dans la veine intérieure (36).

24. Agencement de compresseur selon l'une quelconque des revendications 17 à 23, **caractérisé en ce que** lesdits deuxièmes moyens d'aspiration (60, 64, 66) comportent :
- une cavité intérieure (60) de ladite aube mobile (18), qui débouche par un orifice (64) du côté amont ou du côté aval de ladite roue mobile (14) dans une enceinte intérieure (6) délimitée par le carter intérieur (4), et
- au moins une ouverture traversante (66, 66', 67, 67') du carter intérieur (4) qui fait communiquer ladite enceinte intérieure (6) avec la veine intérieure (36) en au moins un emplacement se trouvant en regard d'une aube fixe (22) de ladite roue fixe (26).

25. Agencement de compresseur selon l'une quelconque des revendications 18 à 24, **caractérisé en ce que** lesdits troisièmes moyens d'aspiration (60, 62) comportent une cavité intérieure (60) de ladite aube mobile (18), qui débouche par un orifice (62) dans la veine extérieure (34).

26. Agencement de compresseur selon l'une quelconque des revendications 19 à 25, **caractérisé en ce que** :
- lesdits quatrièmes moyens (42, 56) d'aspiration comportent une cavité intérieure (42) de ladite aube fixe (22) et au moins un orifice traversant latéral (56) qui met en communication l'extrados de ladite aube fixe (22) avec sa cavité intérieure (42), et
- lesdits cinquièmes moyens d'aspiration (60, 72) comportent une cavité intérieure (60) de ladite aube mobile (18) et au moins un orifice traversant latéral (72) qui met en communication l'extrados de ladite aube mobile (18) avec sa cavité intérieure (60).

27. Agencement de compresseur selon l'une quelconque des revendications 16 à 26, **caractérisé en ce que** lesdits moyens de prélèvement comportent une ouverture traversante (48) faisant communiquer une cavité intérieure (42) de ladite aube fixe (22) avec l'extérieur de la veine (10).

28. Agencement de compresseur selon la revendication 27, **caractérisé en ce que** lesdits moyens de prélèvement comportent en outre au moins un collecteur (50) dans lequel débouche ladite ouverture traversante (48).

29. Agencement de compresseur selon l'une quelconque des revendications 16 à 28, **caractérisé en ce qu'**il comporte, en outre, une virole intermédiaire (84), située entre le carter intérieur (4) et le carter extérieur (8), qui relie entre elles les aubes mobiles (18), et qui délimite, avec les aubes mobiles (18) et avec ledit carter intérieur (4) une enceinte intermédiaire (86).

30. Agencement de compresseur selon la revendication 29, **caractérisé en ce qu'**il comporte, en outre, des moyens additionnels d'aspiration (88'), qui mettent en communication ladite enceinte intermédiaire (86) avec l'enceinte intérieure (6).

31. Agencement de compresseur selon la revendication 30, **caractérisé en ce que** lesdits moyens additionnels d'aspiration comprennent au moins un conduit d'aspiration (83') défini entre des brides de liaison (88') de viroles (80') assemblées entre elles pour former le carter intérieur (4).

32. Etage de compression d'air d'une turbomachine, **caractérisé en ce qu'**il comporte un agencement de compresseur selon l'une quelconque des revendications 16 à 31.

33. Compresseur d'une turbomachine, **caractérisé en ce qu'**il comporte au moins un agencement de compresseur selon l'une quelconque des revendications 16 à 31.

34. Moteur d'aéronef, **caractérisé en ce qu'**il est équipé d'un compresseur comportant au moins un agencement de compresseur selon l'une quelconque des revendications 16 à 31.

## Claims

1. An air circulation method in a turbomachine compressor, said compressor comprising:
- several compression stages (28, 28') each composed of a bladed rotor (14, 14') and a bladed stator (26, 26'),
- an outer casing (8) and an inner casing (4), delimiting a flowpath (10) in which the blades (18, 18') of the rotor (14, 14') and the vanes (22, 22') of the stator (26, 26') are located,
- an outer part of the flowpath called the « outer flowpath » (34), corresponding to functional clearances between the outer casing (8) and the blades (18, 18') of the rotor (14, 14'), and
- an inner part of the flowpath called the « inner flowpath » (36), corresponding to functional clearances between the inner casing (4) and the vanes (22, 22') of the stator (26, 26'),
method **characterised in that** it comprises the following, for at least one compression stage (28) comprising a stator (26):
- a suction operation, during which air present in the inner flowpath (36) is sucked in and sent (52) to at least one vane (22) of said stator (26), and
- at least one bleed operation during which air is bled in said at least one vane (22) of said stator (26) and is sent (54) outside the compressor.

2. An air circulation method according to claim 1, **characterised in that** the method also comprises a suction operation during which:
- air is sucked into at least one blade (18) of at least one rotor (14) adjacent to said stator (26), and is sent (70) into at least one vane (22) of said at least one stator (26).

3. An air circulation method according to claim 2, **characterised in that** the method also comprises a suction operation during which:
- air is sucked into the outer flowpath (34) and is sent (68) into the at least one blade (18) of at least one rotor (14).

4. An air circulation method according to claim 2 or 3, **characterised in that** the method also comprises a suction operation during which:
- air is sucked in at the suction face of the profile of said at least one blade (18) of said at least one rotor (14), and is sent (74) into said at least one blade (18) of said at least one rotor (14), and
- air is sucked in at the suction face of the profile of said at least one vane (22) of said stator (26), and is sent (58) into said at least one vane (22) of said stator (26).

5. An air circulation method according to any one of claims 2 to 4, **characterised in that**:
- air is sucked into at least one blade (18) of the rotor (14) located on the upstream side of said stator (26) and adjacent to it, and is sent (70) into at least one vane (22) of said stator (26).

6. An air circulation method according to any one of claims 2 to 4, **characterised in that**:
- air is sucked into at least one blade (18) of the rotor (14) located on the downstream side of said stator (26) and adjacent to it, and is sent (70) into at least one vane (22) of said stator (26).

7. An air circulation method according to any one of claims 2 to 4, **characterised in that**:
- air is sucked into at least one blade (18, 18") in each of the two rotors (14, 14") located on each side of said stator (26), and is sent (70, 70") into at least one vane (22) of said stator (26).

8. An air circulation method according to any one of claims 1 to 7, **characterised in that** air bled in said compressor stage (28) during said bleed operation is collected in a manifold (50) located outside said compression stage (28).

9. An air circulation method according to any one of claims 1 to 8, **characterised in that** the method also comprises the following, for at least one other compression stage (28') comprising a stator (26'):
- an additional suction operation, during which air present in the inner flowpath (36) is sucked in and is sent (96') into an intermediate chamber (86), and
- an additional bleed operation during which air in said intermediate chamber (86) is bled and is sent (92') inside the compressor.

10. An air circulation method according to claim 9, **characterised in that** the method also comprises an additional suction operation during which:
- air is sucked into at least one blade (18') of at least one rotor (14') adjacent to said stator (26'), and is sent (90') into said intermediate chamber (86).

11. An air circulation method according to claim 10, **characterised in that** the method also comprises an additional suction operation during which:
- air is sucked into the outer flowpath (34) and is sent (68') into said at least one blade (18') of said at least one rotor (14').

12. An air circulation method according to claim 10, **characterised in that** the method also comprises an additional suction operation during which:
- air is sucked in at the suction face of the profile of said at least one blade (18') of said at least one rotor (14'), and is sent (74') into said at least one blade (18') of said at least one rotor (14'), and
- air is sucked in at the suction face of the profile of said at least one vane (22') of said at least one stator (26'), and is sent (58') into said at least one vane (22') of said stator (26').

13. An air circulation method according to any one of claims 10 to 12, **characterised in that**:
- air is sucked into at least one blade (18') of the rotor (14') located on the upstream side of said stator (26') and adjacent to it, and is sent (90') into said intermediate chamber (86).

14. An air circulation method according to any one of claims 10 to 12, **characterised in that**:
- air is sucked into at least one blade (18') of the rotor (14') located on the upstream side of said stator (26') and adjacent to it, and is sent (90') into said intermediate chamber (86).

15. An air circulation method according to any one of claims 10 to 12, **characterised in that**:
- air is sucked into at least one blade (18') in each of the two rotors (14') located on each side of said stator (26'), and is sent (90') into said intermediate chamber (86).

16. A compressor arrangement for carrying out the air circulation method according to any one of claims 1 to 15, said compressor comprising:
- several compression stages (28, 28') each composed of a bladed rotor (14, 14') and a bladed stator (26, 26'),
- an outer casing (8) and an inner casing (4), delimiting a flowpath (10) in which the blades (18, 18') of the rotor (14, 14') and the vanes (22, 22') of the stator (26, 26') are located,
- an outer part of the flowpath called the « outer flowpath » (34), corresponding to functional clearances between the outer casing (8) and the blades (18, 18') of the rotor (14, 14'), and
- an inner part of the flowpath called the « inner flowpath » (36), corresponding to functional clearances between the inner casing (4) and the vanes (22, 22') of the stator (26, 26'),
compressor arrangement **characterised in that** it comprises the following, for at least one compression stage (28) comprising a stator (26):
- first suction means (42, 44), to suck in air present in the inner flowpath (36), and to send this air into at least one vane (22) of said stator (26), and
- bleed means (48, 50), to bleed air in said at least one vane (22) of said stator (26) and to send this air outside the compressor.

17. A compressor arrangement according to claim 16, **characterised in that** it also comprises:
- second suction means (60, 64, 66), to suck air into at least one blade (18) of at least one rotor (14) adjacent to said stator (22), and to send it into at least one vane (22) of said stator (26).

18. A compressor arrangement according to claim 17, **characterised in that** it also comprises:
- third suction means (60, 62), to suck air into the outer flowpath (34), and to send it into at least one blade (18) of said at least one rotor (14).

19. A compressor arrangement according to claim 17 or 18, **characterised in that** it also comprises:
- fourth suction means (42, 56), to suck air in at the suction face of the profile of at least one vane (22) of said stator (26), and to send it into said at least one vane (22) of said stator (26), and
- fifth suction means (60, 72), to suck air in at the suction face of the profile of at least one blade (18) of said at least one rotor (14), and to send it directly into said at least one blade (18) of said at least one rotor (14).

20. A compressor arrangement according to any one of claims 17 to 19, **characterised in that** it comprises:
- second suction means (60, 64, 66), to suck air into at least one blade (18) of the rotor (14) located on the upstream side of said stator (22), and to send it into at least one vane (22) of said stator (26).

21. A compressor arrangement according to any one of claims 17 to 19, **characterised in that** it comprises:
- second suction means (60, 64, 66), to suck air into at least one blade (18) of the rotor (14) located on the downstream side of said stator (22), and to send it into at least one vane (22) of said stator (26).

22. A compressor arrangement according to any one of claims 17 to 19, **characterised in that** it comprises:
- second suction means (60, 60", 64, 64", 66), to suck air into at least one blade (18) in each of the two rotors (14) located on each side of said stator (22), and to send it into at least one vane (22) of said stator (26).

23. A compressor arrangement according to any one of claims 16 to 22, **characterised in that** said first suction means (42, 44) comprise an inner cavity (42) in said vane (22) opening up into the inner flowpath (36) through an orifice (44).

24. A compressor arrangement according to any one of claims 17 to 23, **characterised in that** said second suction means (60, 64, 66) comprise:
- an inner cavity (60) in said blade (18), that opens up in an orifice (64) on the upstream side or the downstream side of said rotor (14) in an inner chamber (6) delimited by the inner casing (4), and
- and at least one through opening (66, 66', 67, 67') in the inner casing (4) that creates a communication between said inner chamber (6) and the inner flowpath (36) at at least one location facing a vane (22) of said stator (26).

25. A compressor arrangement according to any one of claims 18 to 24, **characterised in that** said third suction means (60, 62) comprise an inner cavity (60) in said blade (18), that opens up in an orifice (62) in the outer flowpath (34).

26. A compressor arrangement according to any one of claims 19 to 25, **characterised in that**:
- said fourth suction means (42, 56) comprise an inner cavity (42) in said vane (22) and at least one lateral through orifice (56) that creates a communication between the suction face of said vane (22) and its inner cavity (42), and
- said fifth suction means (60, 72) comprise an inner cavity (60) in said blade (18) and at least one lateral through orifice (72) that creates a communication between the suction face of said blade (18) and its inner cavity (60).

27. A compressor arrangement according to any one of claims 16 to 26, **characterised in that** said bleed means comprise a through opening (48) that creates a communication between an inner cavity (42) de of said vane (22) with the outside of the flowpath (10).

28. A compressor arrangement according to claim 27, **characterised in that** said bleed means also comprise at least one manifold (50) in which said through opening (48) opens up.

29. A compressor arrangement according to any one of claims 16 to 28, **characterised in that** it also comprises an intermediate shell (84) located between the inner casing (4) and the outer casing (8), that connects the blades (18) to each other, and that delimits an intermediate chamber (86) with the blades (18) and with said inner casing (4).

30. A compressor arrangement according to claim 29, **characterised in that** it also comprises additional suction means (88'), that creates a communication between said intermediate chamber (86) and the inner chamber (6).

31. A compressor arrangement according to claim 30, **characterised in that** said additional suction means comprise at least one suction duct (83') defined between connecting flanges (88') of the shells (80') assembled to each other to form the inner casing (4).

32. An air compression stage of a turbomachine, **characterised in that** it comprises a compressor arrangement according to any one of claims 16 to 31.

33. A turbomachine compressor, **characterised in that** it comprises at least one compressor arrangement according to any one of claims 16 to 31.

34. An aircraft engine, **characterised in that** it is equipped with a compressor comprising at least one compressor arrangement according to any one of claims 16 to 31.

## Patentansprüche

1. Luftzirkulationsverfahren in einem Verdichter von Turbomaschinen, wobei dieser Verdichter
- mehrere Verdichterstufen (28, 28'), die jeweils von einem Rotorschaufelrad (14,14') und einem Statorschaufelrad (26, 26') gebildet werden,
- ein Außengehäuse (8) und ein Innengehäuse (4), die eine Strömungsbahn (10) umgrenzen, in der sich die Rotorschaufeln (18, 18') des Rotorschaufelrades (14, 14') und die Statorschaufeln (22, 22') des Statorschaufelrades (26, 26') befinden,
- einen äußeren Teil der Strömungsbahn, die sogenannte "äußere Strömungsbahn" (34), die funktionalen Spielen zwischen dem Außengehäuse (8) und den Rotorschaufeln (18, 18') des Rotorschaufelrades (14, 14') entspricht, und
- einen inneren Teil der Strömungsbahn, die sogenannte "innere Strömungsbahn" (36), die funktionalen Spielen zwischen dem Innengehäuse (4) und den Statorschaufeln (22, 22') des Statorschaufelrades (26, 26') entspricht, umfasst,
**dadurch gekennzeichnet,**
**dass** es bei mindestens einer Verdichterstufe (28) mit einem Statorschaufelrad (26)
- einen Ansaugvorgang, bei dem in der inneren Strömungsbahn (36) vorhandene Luft angesaugt wird und in mindestens eine Statorschaufel (22) des Statorschaufelrades (26) geschickt wird,
- mindestens einen Luftentnahmevorgang, bei dem Luft aus dieser mindestens einen Statorschaufel (22) dieses Statorschaufelrades (26) entnommen und in die Außenumgebung des Verdichters transportiert (54) wird,
beinhaltet.

2. Luftzirkulationsverfahren nach Anspruch 1,
**dadurch gekennzeichnet,**
**dass** es ferner einen Ansaugvorgang beinhaltet, bei dem
- Luft in mindestens eine Rotorschaufel (18) mindestens eines an das genannte Statorschaufelrad (26) angrenzenden Rotorschaufelrades (14) gesaugt und in mindestens eine Statorschaufel (22) dieses mindestens einen Statorschaufelrades (26) geschickt (70) wird.

3. Luftzirkulationsverfahren nach Anspruch 2,
**dadurch gekennzeichnet,**
**dass** es ferner einen Ansaugvorgang beinhaltet, bei dem
- Luft in die äußere Strömungsbahn (34) gesaugt und in die mindestens eine Rotorschaufel (18) mindestens eines Rotorschaufelrades (14) geschickt (68) wird.

4. Luftzirkulationsverfahren nach Anspruch 2 oder 3,
**dadurch gekennzeichnet,**
**dass** es ferner einen Ansaugvorgang beinhaltet, bei dem
- Luft an der Saugseite des Profils dieser mindestens einen Rotorschaufel (18) dieses mindestens einen Rotorschaufelrades (14) angesaugt und in diese mindestens eine Rotorschaufel (18) dieses mindestens einen Rotorschaufelrades (14) geschickt (74) wird, und
- Luft an der Saugseite des Profils dieser mindestens einen Statorschaufel (22) dieses Statorschaufelrades (26) angesaugt und in diese mindestens eine Statorschaufel (22) dieses Statorschaufelrades (26) geschickt (58) wird.

5. Luftzirkulationsverfahren nach einem der Ansprüche 2 bis 4,
**dadurch gekennzeichnet,**
**dass** :
- Luft aus mindestens einer Rotorschaufel (18) des vor diesem Statorschaufelrad (26) befindlichen und an dieses angrenzenden Rotorschaufelrades (14) angesaugt und in mindestens eine Statorschaufel (22) dieses Statorschaufelrades (26) geschickt (70) wird.

6. Luftzirkulationsverfahren nach einem der Ansprüche 2 bis 4,
**dadurch gekennzeichnet,**
**dass** :
- Luft aus mindestens einer Rotorschaufel (18) des hinter diesem Statorschaufelrad (26) befindlichen und an dieses angrenzenden Rotorschaufelrades (14) angesaugt und in mindestens eine Statorschaufel (22) dieses Statorschaufelrades (26) geschickt (70) wird.

7. Luftzirkulationsverfahren nach einem der Ansprüche 2 bis 4,
**dadurch gekennzeichnet,**
**dass :**
- Luft aus mindestens einer Rotorschaufel (18, 18") jedes der beiden beiderseits dieses Statorschaufelrades (26) befindlichen Rotorschaufelräder (14, 14") angesaugt und in mindestens eine Statorschaufel (22) dieses Statorschaufelrades (26) geschickt (70, 70") wird.

8. Luftzirkulationsverfahren nach einem der Ansprüche 1 bis 7,
**dadurch gekennzeichnet,**
**dass** bei dem genannten Luftentnahmevorgang die aus der genannten Verdichterstufe (28) entnommene Luft in einer Sammelleitung (50) gesammelt wird, welche sich außerhalb dieser Verdichterstufe (28) befindet.

9. Luftzirkulationsverfahren nach einem der Ansprüche 1 bis 8,
**dadurch gekennzeichnet,**
**dass** es ferner bei mindestens einer weiteren Verdichterstufe (28') mit einem Statorschaufelrad (26')
- einen zusätzlichen Ansaugvorgang, bei dem in der inneren Strömungsbahn (36) vorhandene Luft angesaugt wird und in einen abgeschlossenen Zwischenraum (86) geschickt (96') wird, und
- einen zusätzlichen Luftentnahmevorgang, bei dem Luft aus diesem abgeschlossenen Zwischenraum (86) entnommen und ins Innere des Verdichters geschickt (92') wird, beinhaltet.

10. Luftzirkulationsverfahren nach Anspruch 9,
**dadurch gekennzeichnet,**
**dass** es ferner einen zusätzlichen Ansaugvorgang beinhaltet, bei dem
- Luft aus mindestens einer Rotorschaufel (18') mindestens eines an das genannte Statorschaufelrad (26') angrenzenden Rotorschaufelrades (14') gesaugt und in diesen abgeschlossenen Zwischenraum (86) geschickt (90') wird.

11. Luftzirkulationsverfahren nach Anspruch 10,
**dadurch gekennzeichnet,**
**dass** es ferner einen zusätzlichen Ansaugvorgang beinhaltet, bei dem
- Luft in der äußeren Strömungsbahn (34) angesaugt und in die mindestens eine Rotorschaufel (18') dieses mindestens einen Rotorschaufelrades (14') geschickt (68') wird.

12. Luftzirkulationsverfahren nach Anspruch 10,
**dadurch gekennzeichnet,**
**dass** es ferner einen zusätzlichen Ansaugvorgang beinhaltet, bei dem
- Luft an der Saugseite des Profils dieser mindestens einen Rotorschaufel (18') dieses mindestens einen Rotorschaufelrades (14') angesaugt und in diese mindestens eine Rotorschaufel (18') dieses mindestens einen Rotorschaufelrades (14') geschickt (74') wird, und
- Luft an der Saugseite des Profils dieser mindestens einen Statorschaufel (22') dieses mindestens einen Statorschaufelrades (26') angesaugt und in diese mindestens eine Statorschaufel (22') dieses Statorschaufelrades (26') geschickt (58') wird.

13. Luftzirkulationsverfahren nach einem der Ansprüche 10 bis 12,
**dadurch gekennzeichnet,**
**dass** :
- Luft aus mindestens einer Rotorschaufel (18') des vor diesem Statorschaufelrad (26') befindlichen und an dieses angrenzenden Rotorschaufelrades (14') angesaugt und in diesen abgeschlossenen Zwischenraum (86) geschickt (90') wird.

14. Luftzirkulationsverfahren nach einem der Ansprüche 10 bis 12,
**dadurch gekennzeichnet,**
**dass :**
- Luft in mindestens einer Rotorschaufel (18') des hinter diesem Statorschaufelrad (26') befindlichen und an dieses angrenzenden Rotorschaufelrades (14') angesaugt und in diesen abgeschlossenen Zwischenraum (86) geschickt (90') wird.

15. Luftzirkulationsverfahren nach einem der Ansprüche 10 bis 12,
**dadurch gekennzeichnet,**
**dass** :
- Luft in mindestens einer Rotorschaufel (18') jedes der beiden beiderseits dieses Statorschaufelrades (26') befindlichen Rotorschaufelräder (14') angesaugt und in diesen abgeschlossenen Zwischenraum (86) geschickt (30') wird.

16. Verdichtervorrichtung zur Durchführung des Luftzirkulationsverfahrens nach einem der Ansprüche 1 bis 15, wobei dieser Verdichter
- mehrere Verdichterstufen (28, 28'), die jeweils von einem Rotorschaufelrad (14, 14') und einem Statorschaufelrad (26, 26') gebildet werden,
- ein Außengehäuse (8) und ein Innengehäuse (4), die eine Strömungsbahn (10) umgrenzen, in der sich die Rotorschaufeln (18, 18') des Rotorschaufelrades (14, 14') und die Statorschaufeln (22, 22') des Statorschaufelrades (26, 26') befinden,
- einen äußeren Teil der Strömungsbahn, die sogenannte "äußere Strömungsbahn" (34), die funktionalen Spielen zwischen dem Außengehäuse (8) und den Rotorschaufeln (18, 18') des Rotorschaufelrades (14, 14') entspricht, und
- einen inneren Teil der Strömungsbahn, die sogenannte "innere Strömungsbahn" (36), die funktionalen Spielen zwischen dem Innengehäuse (4) und den Statorschaufeln (22, 22') des Statorschaufelrades (26, 26') entspricht, umfasst,
**dadurch gekennzeichnet,**
**dass** sie bei mindestens einer Verdichterstufe (28) mit einem Statorschaufelrad (26):
- erste Ansaugmittel (42, 44), um in der inneren Strömungsbahn (36) vorhandene Luft anzusaugen und diese Luft in mindestens eine Statorschaufel (22) dieses Statorschaufelrades (26) zu schicken, und
- Luftentnahmemittel (48, 50), um Luft in dieser mindestens einen Statorschaufel (22) dieses Statorschaufelrades (26) zu entnehmen und in die Außenumgebung des Verdichters zu schicken,
beinhaltet.

17. Verdichtervorrichtung nach Anspruch 16,
**dadurch gekennzeichnet,**
**dass** sie ferner aufweist:
- zweite Ansaugmittel (60, 64, 66), um Luft in mindestens eine Rotorschaufel (18) mindestens eines an das genannte Statorschaufelrad (26) angrenzenden Rotorschaufelrades (14) zu saugen und sie in mindestens eine Statorschaufel (22) dieses Statorschaufelrades (26) zu schicken.

18. Verdichtervorrichtung nach Anspruch 17,
**dadurch gekennzeichnet,**
**dass** sie ferner aufweist:
- dritte Ansaugmittel (60, 62), um Luft in die äußere Strömungsbahn (34) zu saugen und sie in mindestens eine Rotorschaufel (18) dieses mindestens einen Rotorschaufelrades (14) zu schicken.

19. Verdichtervorrichtung nach Anspruch 17 oder 18,
**dadurch gekennzeichnet,**
**dass** sie ferner aufweist:
- vierte Ansaugmittel (42, 56), um Luft an der Saugseite des Profils von mindestens einer Statorschaufel (22) dieses Statorschaufelrades (26) anzusaugen und sie in diese mindestens eine Statorschaufel (22) dieses Statorschaufelrades (26) zu schicken, und
- fünfte Ansaugmittel (60, 72), um Luft an der Saugseite des Profils mindestens einer Rotorschaufel (18) dieses mindestens einen Rotorschaufelrades (14) anzusaugen und sie direkt in diese mindestens eine Rotorschaufel (18) dieses mindestens einen Rotorschaufelrades (14) zu schicken.

20. Verdichtervorrichtung nach einem der Ansprüche 17 bis 19,
**dadurch gekennzeichnet,**
**dass** sie aufweist:
- zweite Ansaugmittel (60, 64, 66), um Luft in mindestens einer Rotorschaufel (18) des vor diesem Statorschaufelrad (26) befindlichen Rotorschaufelrades (14) anzusaugen und sie in mindestens eine Statorschaufel (22) dieses Statorschaufelrades (26) zu schicken.

21. Verdichtervorrichtung nach einem der Ansprüche 17 bis 19,
**dadurch gekennzeichnet,**
**dass** sie aufweist:
- zweite Ansaugmittel (60, 64, 66), um Luft in mindestens einer Rotorschaufel (18) des hinter diesem Statorschaufelrad (26) befindlichen Rotorschaufelrades (14) anzusaugen und sie in mindestens eine Statorschaufel (22) dieses Statorschaufelrades (26) zu schicken.

22. Verdichtervorrichtung nach einem der Ansprüche 17 bis 19,
**dadurch gekennzeichnet,**
**dass** sie aufweist:
- zweite Ansaugmittel (60, 60", 64, 64", 66), um Luft in mindestens einer Rotorschaufel (18) jedes der beiden beiderseits dieses Statorschaufelrades (26) befindlichen Rotorschaufelräder (14) anzusaugen und sie in mindestens eine Statorschaufel (22) dieses Statorschaufelrades (26) zu schicken.

23. Verdichtervorrichtung nach einem der Ansprüche 16 bis 22,
**dadurch gekennzeichnet,**
**dass** diese ersten Ansaugmittel (42,44) einen inneren Hohlraum (42) der Statorschaufel (22) umfassen, der durch eine Öffnung (44) in die innere Strömungsbahn (36) mündet.

24. Verdichtervorrichtung nach einem der Ansprüche 17 bis 23,
**dadurch gekennzeichnet,**
**dass** diese zweiten Ansaugmittel (60, 64, 66)
- einen inneren Hohlraum (60) der Rotorschaufel (18), der durch eine Öffnung (64) von der vorderen Seite oder der hinteren Seite des Rotorschaufelrades (14) in einen inneren abgeschlossenen Raum (6) mündet, welcher von dem Innengehäuse (4) gebildet wird, und
- mindestens eine durchgehende Öffnung (66, 66', 67, 67') des Innengehäuses (4), die diesen inneren abgeschlossenen Raum (6) mit der inneren Strömungsbahn (36) in Verbindung setzt, und zwar an mindestens einer Stelle, die sich gegenüber einer Statorschaufel (22) des Statorschaufelrades (26) befindet,
umfassen.

25. Verdichtervorrichtung nach einem der Ansprüche 18 bis 24,
**dadurch gekennzeichnet,**
**dass** die dritten Ansaugmittel (60, 62) einen inneren Hohlraum (60) der Rotorschaufel (18) umfassen, der durch eine Öffnung (62) in die äußere Strömungsbahn (34) mündet.

26. Verdichtervorrichtung nach einem der Ansprüche 19 bis 25,
**dadurch gekennzeichnet,**
**dass**
- die vierten Ansaugmittel (42, 56) einen inneren Hohlraum (42) der Statorschaufel (22) und mindestens eine seitliche, durchgehende Öffnung (56) umfassen, die die Saugseite der Statorschaufel (22) mit ihrem inneren Hohlraum (42) in Verbindung setzt, und
- die fünften Ansaugmittel (60, 72) einen inneren Hohlraum (60) der Rotorschaufel (18) und mindestens eine seitliche, durchgehende Öffnung (72) umfassen, die die Saugseite dieser Rotorschaufel (18) mit ihrem inneren Hohlraum (60) in Verbindung setzt.

27. Verdichtervorrichtung nach einem der Ansprüche 16 bis 26,
**dadurch gekennzeichnet,**
**dass** die genannten Luftentnahmemittel eine durchgehende Öffnung (48) umfassen, die einen inneren Hohlraum (42) der Statorschaufel (22) mit der Außenumgebung der Strömungsbahn (10) in Verbindung setzt.

28. Verdichtervorrichtung nach Anspruch 17,
**dadurch gekennzeichnet,**
**dass** die genannten Luftentnahmemittel ferner mindestens eine Sammelleitung (50) umfassen, in die diese durchgehende Öffnung (48) mündet.

29. Verdichtervorrichtung nach einem der Ansprüche 16 bis 28,
**dadurch gekennzeichnet,**
**dass** sie ferner einen Zwischenring (84) aufweist, der sich zwischen dem Innengehäuse (4) und dem Außengehäuse (8) befindet, die Rotorschaufeln (18) miteinander verbindet und zusammen mit den Rotorschaufeln (18) und mit diesem Innengehäuse (4) einen abgeschlossenen Zwischenraum (86) umgrenzt.

30. Verdichtervorrichtung nach Anspruch 29,
**dadurch gekennzeichnet,**
**dass** sie ferner zusätzliche Ansaugmittel (88') aufweist, die diesen abgeschlossenen Zwischenraum (86) mit dem inneren abgeschlossenen Raum (6) in Verbindung setzen.

31. Verdichtervorrichtung nach Anspruch 30,
**dadurch gekennzeichnet,**
**dass** die genannten zusätzlichen Ansaugmittel mindestens eine Ansaugleitung (83') umfassen, die zwischen Verbindungsflanschen (88') von Ringen (80') gebildet ist, welche untereinander verbunden sind, um das Innengehäuse (4) zu bilden.

32. Luftverdichterstufe einer Turbomaschine,
**dadurch gekennzeichnet,**
**dass** sie eine Verdichtervorrichtung nach einem der Ansprüche 16 bis 31 aufweist.

33. Verdichter einer Turbomaschine,
**dadurch gekennzeichnet,**
**dass** er mindestens eine Verdichtervorrichtung nach einem der Ansprüche 16 bis 31 aufweist.

34. Flugzeugmotor,
**dadurch gekennzeichnet,**
**dass** er mit einem Verdichter ausgerüstet ist, der mindestens eine Verdichtervorrichtung nach einem der Ansprüche 16 bis 31 aufweist.
